(19) Europäisches Patentamt
European Patent Office
Office européen des brevets

(11) EP 1 095 978 B1

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
***C08L 23/02*** *(2006.01)* ***C08K 5/15*** *(2006.01)*

(21) Anmeldenummer: **00810956.3**

(22) Anmeldetag: **17.10.2000**

(54) **Additivgemisch zur Verbesserung der mechanischen Eigenschaften von Polymeren**

Additiv mixture for improvement of mechanic properties of polymers

Mélange d'additifs pour améliorer les charactéristiques mécaniques des polymères

(84) Benannte Vertragsstaaten:
**AT BE CH CY DE DK ES FI FR GB GR IE IT LI LU MC NL PT SE**

(30) Priorität: **26.10.1999 CH 195499**

(43) Veröffentlichungstag der Anmeldung:
**02.05.2001 Patentblatt 2001/18**

(73) Patentinhaber: **Ciba Specialty Chemicals Holding Inc.**
**4057 Basel (CH)**

(72) Erfinder:
- **Simon, Dirk**
  **67112 Mutterstadt (DE)**
- **Pfaender, Rudolf**
  **64668 Rimbach (DE)**
- **Steinert, Andreas Konrad**
  **40764 Langenfeld (DE)**

(56) Entgegenhaltungen:
**EP-A- 0 922 729**
**WO-A-97/30112**
**DE-C- 19 511 579**
**US-A- 5 037 888**

EP 1 095 978 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft eine Zusammensetzung zur Verbesserung der mechanischen Eigenschaften von Polyolefinen und Vinylpolymeren, insbesondere von Polyethylen, Polypropylen sowie deren Copolymeren und Mischungen. Es kann sich dabei um neue Kunststoffe oder um Kunststoffrecyclate handeln. Als Beispiel seien Polyethylenwerkstoffe, wie sie in Kunststoffkraftstoffbehältern (KKB) eingesetzt werden, genannt. Weitere Gegenstände der Erfindung sind ein Verfahren zur Verbesserung der mechanischen Eigenschaften und zur Molekulargewichtserhöhung vorstehend genannter Kunststoffe durch chemische Modifizierung, die Verwendung der erfindungsgemäßen Additivkombination zur Verbesserung der mechanischen Eigenschaften von Kunststoffen sowie das durch diesen Prozess erhaltene modifizierte Kunststoffprodukt.

Obwohl in zahlreichen Anwendungsbereichen eingesetzt, können technische Werkstoffe aus Polyolefinen und Vinylpolymeren nicht alle vom Markt gewünschten Ansprüche erfüllen. Insbesondere im Hinblick auf ihre mechanischen Eigenschaften, wie zum Beispiel die Schlagzähigkeit bei niedrigen Temperaturen, ist eine Eigenschaftsverbesserung wünschenswert.

Kunststoffe wie Polyethylen (PE), Polypropylen (PP), Polyvinylchlorid (PVC), Polystyrol (PS) usw. können zudem durch die Verarbeitung und den oft langjährigen Gebrauch unter dem Einfluß der thermischen Belastung, der Oxidation, der Witterung und durch Licht derart geschädigt werden, daß die Stabilität des Materials nicht mehr gewährleistet ist und sich die physikalischen und mechanischen Eigenschaftensignifikant verschlechtern. Diese Schädigung hat zur Folge, dass die resultierenden recyclierten Werkstoffe" nicht wieder in der ursprünglichen Anwendung verwendet werden können. Ein HDPE-Recyclat aus gebrauchten Kunststoffkraftstoffbehältern (KKB) kann z. B. aufgrund unzureichender Langzeitstabilität und schlechter mechanischer Eigenschaften nicht wieder als alleiniger Werkstoff in der Herstellung neuer KKB eingesetzt werden.

EP 702 704 B1 beschreibt die Verwendung einer Additivkombination zur Stabilisierung von recyclierten Thermoplasten, mit dessen Hilfe die mechanischen Eigenschaften des Werkstoffs verbessert werden können. Die Verbesserung ist jedoch insbesondere für die Schlagzähigkeit in der Kälte nicht ausreichend.

Aufgabe der vorliegenden Erfindung ist daher die Bereitstellung einer neuen Additivkombination, mit der gegenüber den bereits bekannten Zusätzen Kunststoffe mit verbesserten mechanischen Eigenschaften, insbesondere verbesserter Schlagzähigkeit, erhalten werden können. Insbesondere soll der Zusatz dieses Additivsystems auch die vollständige und uneingeschränkte Wiederverwendung von HDPE-Recyclat aus gebrauchten Kunststoffkraftstoffbehältern in derselben Nutzung ermöglichen.

Kunststoffkraftstoffbehälter werden serienmäßig durch Extrusionsblasformen hergestellt. Die Prozeßführung mit kleinen Zykluszeiten und zahlreichen weiteren Verfahrensparametern verlangt hohe Qualitätsanforderungen an das eingesetzte HDPE-Rohmaterial (thermodynamische Eigenschaften, rheologische Eigenschaften bei hohen und niedrigen Scherraten, Eigenschaften der Oberfläche in der Schmelze und beim Erkalten des Hohlkörpers, u.a.).

Die Aufbereitung gebrauchter Kunststoffkraftstoffbehälter (KKB) erfolgt dabei zum Beispiel durch Zerkleinern, Entfernen von Benzin/Diesel-Resten durch Extraktion beispielsweise durch Lösungsmittel. Bei der Extraktion mit Lösungsmittel (z.B. Hexan oder andere niederflüchtige Alkane bzw. Alkangemische) werden neben den Verunreinigungen (Benzin/Diesel-Reste, u.a.) auch evtl. vorhandene aktive Stabilisatorreste entfernt. Bei der zusätzlich vorhandenen Vorschädigung des Materials wird dann die Wiederverwendung in anspruchsvollen Anwendungen (z.B. im geschlossenen Zyklus als Kunststoffkraftstoffbehälter) nahezu unmöglich.

Die Verwendung von recycliertem Polyethylen als Bestandteil mehrschichtiger Kraftstofftanks ist im Stand der Technik vielfach beschrieben. Aufgrund der gegenüber dem Neumaterial schlechteren mechanischen Eigenschaften des Recyclats wird dieses Material jedoch nicht in äußeren Schichten des Blasformteils eingesetzt. Zudem beträgt dessen Anteil im Produkt gegenwärtig max. 45 Gew. %. *[Kunststoffe* 82, (1992), 3, 201 - 206]

Die Verwendung von Mischungen aus den kommerziell erhältlichen primären und sekundären Antioxidantien kann lediglich eine Stabilisierung des Materials im Verarbeitungsprozeß und für die Dauer des Gebrauchs gewährleisten; eine Verbesserung der mechanischen Eigenschaften wird jedoch nicht erreicht. [R. Gächter, H. Müller, "Kunststoff-Additive", 3. Ausgabe 1989, 26 - 31 + 65 - 74, Carl Hanser Verlag, München]

Der Einsatz einer Additivkombination enthaltend neben Antioxidantien mindestens ein multifunktionelles Oxiran, wird in EP-702 704 B1 beschrieben. Das genannte System kann zur Stabilisierung und Rheologiemodifizierung von recyclierten Thermoplasten verwendet werden und dient u. a. zur Verbesserung der mechanischen Eigenschaften des Werkstoffs. Eine Verbesserung der mechanischen Eigenschaften bei tiefen Temperaturen (< 0°C), insbesondere der Kälteschlagzähigkeit, wird dadurch jedoch nicht erhalten.

Es wurde nun gefunden, dass dies mit einer Zusammensetzung, enthaltend einen Werkstoff aus Polyolefinen oder Vinylpolymeren sowie mindestens ein durch funktionelle Gruppen modifiziertes Polymer oder Oligomer und ein multifunktionelles Epoxid gelöst werden kann.

Es kann vorteilhaft sein, wenn zusätzlich mindestens ein Antioxidans oder ein weiterer Verarbeitungsstabilisator zugesetzt werden.

Durch Zusatz dieser multifunktionellen polymeren Komponente wird eine weitergehende Verbesserung der Schlagzähigkeit, insbesondere der Kälteschlagzähigkeit bei Temperaturen < 0°C, wie sie für Kunststoffkraftstoffbehälter (KKB) gefordert ist, erreicht.

Ein Gegenstand der Erfindung ist eine Zusammensetzung enthaltend

a) mindestens ein Polyolefin oder Vinylpolymeres;
b) mindestens ein di- oder polyfunktionelles (Co)polymer oder (Co)oligomer mit einer Glastemperatur von weniger als 10° C, welches ausgewählt wird aus der Gruppe bestehend aus Polysiloxanen und Butadien-Acrylnitril-Copolymeren, die jeweils an den Kettenenden durch Amin-, Oxiran- oder Vinylgruppen funktionalisiert sind; und
c) ein multifunktionelles Epoxid, weiches verschieden ist von dem di- oder polyfunktionellen (Co)polymer oder (Co) oligomer mit einer Epoxygruppe.

Bevorzugt ist eine Zusammensetzung, worin das Polyolefin oder das Vinylpolymere ein Recyclat ist.

Unter Recyclat ist im Rahmen der vorliegenden Erfindung ein vorgeschädigtes Polyolefin oder Vinylpolymer zu verstehen, welches gesammelt und einer Wiederverarbeitung zugeführt wird.

Es handelt sich bei dem vorgeschädigten Polyolefin oder Vinylpolymeren beispielsweise um aus Sammlungen aus Haushalt, Handelsgeschäften (wie z.B. Supermärkten) und in Industriebetrieben (z.B. Stretchfolien, Säcke etc.) gewonnenes Polyolefin. Es kann sich dabei z.B. um Folien, Beutel, Flaschen und andere Behälter oder Schaumstoffe handeln. Es können aber auch durch Gebrauch, Lagerung oder Verarbeitung vorgeschädigte Kunstoffe wiederverarbeitet werden, wie beispielsweise Produktionsabfälle (Folien etc.) oder getrennt gesammelte Altmaterialien (Agrarfolien, Autoteile etc.).

Bevorzugt handelt es sich um Polyolefin-Recyclate insbesondere aus HDPE und besonders bevorzugt um gebrauchte Automobilkraftstoffbehälter aus Kunststoffen.

Beispiele für Vinylpolymere sind Polyvinylchlorid, Polystyrol insbesondere syndiotaktisches Polystyrol und seine Copolymeren (z.B. mit Acrylnitril,), Acrylatpolymere, Polymethylmethacrylat oder Polyvinylacetat.

Bevorzugt ist eine Zusammensetzung, worin das Vinylpolymer ein Polystyrol, Polyacrylnitril oder ein Copolymeres davon ist.

Beispiele für Polyolefine sind:

1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen hoher Dichte und hoher Molmasse (HDPE-HMW), Polyethylen hoher Dichte und ultrahoher Molmasse (HDPE-UHMW), Polyethylen mittlerer Dichte (MDPE), Polyethylen niederer Dichte (LDPE), lineares Polyethylen niederer Dichte (LLDPE), verzweigtes Polyethylen niederer Dichte (VLDPE).
Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:

a) radikalisch (gewöhnlich bei hohem Druck und hoher Temperatur).

b) mittels Katalysator, wobei der Katalysator gewöhnlich ein oder mehrere Metalle der Gruppe IVb, Vb, VIb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder $\pi$- oder $\sigma$-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen Ia, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.

2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE, LDPE/LLDPE).

3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-lsobutylen-Copolymere, Ethylen-Buten-1-Copolymere, Ethylen-Hexen-Copolymere, Ethylen-Methylpenten-Copolymere, Ethylen-Hepten-Copolymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, EthylenVinylacetat-Copolymere und deren Copolymere mit Kohlenstoffmonoxid, oder EthylenAcrylsäure-Copolymere und deren Salze (lonomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propylen-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.

Das Polyolefin muss nicht sortenrein sein, sondern es kann sich dabei auch um einen Verbundwerkstoff handeln, der nur zum Teil aus einem Polyolefin Polymer besteht.

Bevorzugt ist eine Zusammensetzung, worin das Polyolefin, Polyethylen, Polypropylen oder ein Copolymeres davon ist.

Die di- oder polyfunktionellen (Co)polymere oder (Co)oligomere mit einer Glastemperatur von weniger als 10° C sind beispielsweise im Handel erhältlich oder lassen sich in bekannter Weise aus im Handel befindlichen Produkten herstellen.

Handelsübliche (Co)polymere oder (Co)oligomere mit einer Glastemperatur von weniger als 10°C werden über polymeranaloge Umsetzung zusätzlich funktionalisiert.

Monomere, aus welchen Polymere mit einer Glastemperatur von weniger als 10°C erhalten werden können, sind z. B. in Sächtling, Kunststoff-Taschenbuch, 26. Ausgabe 1995 S. 727-736 beschrieben. Sie werden so polymerisiert, daß unmittelbar Produkte mit mindestens zwei speziellen funktionellen Gruppen entstehen. Zum Beispiel können zur Initiierung der Polymerisation funktionalisierte Initiatoren oder zum Abbruch der Polymerisation funktionalisierte Abbruchreagentien eingesetzt werden. So können spezielle funktionelle Gruppen als Endgruppen während oder im Anschluß an die Polymerisation eingeführt werden. Dies ist zum Beispiel in DE 4344082 für einen Prozeß zur Herstellung von sekundärem Aminoalkyl-funktionalisiertem Polysiloxan beschrieben. Dabei werden difunktionelle Polymere erhalten, die im Rahmen der vorliegenden Erfindung eingesetzt werden können.

Polysiloxane, welche an den Kettenenden durch Amin-, Oxiran- oder Vinylgruppen funktionalisiert sind. z. B. Tegomer®-Produkte der Fa. Th. Goldschmidt AG.

Butadien-Acrylnitril-Copolymere, die an den Kettenenden durch Amin-, Oxiran- oder Vinylgruppen funktionalisiert sind. z. B. Hycar®-Produkte der Fa. BF Goodrich.

Die Glastemperatur dieser Komponente beträgt weniger als 10° C, bevorzugt weniger als 0° C. Im Falle von zwei Glastemperaturen bei Copolymeren reicht es aus, wenn eine der beiden Glastemperaturen weniger als 10° C bzw 0° C beträgt.

Besonders bevorzugt ist als di- oder polyfunktionelles (Co)polymer oder (Co)oligomer ein Polysiloxan Polymer, welches endständige Amin- oder Epoxy-Gruppen enthält.

Die im Rahmen der Erfindung verwendbaren Epoxidverbindungen c) können eine aliphatische, aromatische, cycloaliphatische, araliphatische oder heterocyclische Struktur haben; sie enthalten Epoxidgruppen als Seitengruppen. Die Epoxidgruppen sind vorzugsweise als Glycidylgruppen über Ether- oder Esterbindungen mit dem Restmolekül verbunden, oder es handelt sich um N-Glycidylderivate von heterocyclischen Aminen, Amiden oder Imiden. Epoxidverbindungen dieser Typen sind allgemein bekannt und im Handel erhältlich.

Die Epoxidverbindungen enthalten Epoxyreste, insbesondere solche der Formel A

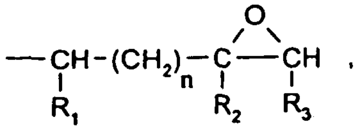

(A)

wobei diese direkt an Kohlenstoff, Sauerstoff-, Stickstoff- oder Schwefelatome gebunden sind, worin $R_1$ und $R_3$ beide Wasserstoff sind, $R_2$ Wasserstoff oder Methyl und n=0 ist, oder worin $R_1$ und $R_3$ zusammen $-CH_2-CH_2-$ oder $-CH_2-CH_2-CH_2-$ bedeuten, $R_2$ dann Wasserstoff und n=0 oder 1 ist.

Beispielhaft für Epoxidverbindungen sind zu erwähnen:

I) Polyglycidyl- und Poly-(β-methylglycidyl)-ester erhältlich durch Umsetzung einer Verbindung mit mindestens zwei Carboxylgruppen im Molekül und Epichlorhydrin bzw. Glycerindichlorhydrin bzw. β-Methyl-epichlorhydrin. Die Umsetzung erfolgt zweckmässig in der Gegenwart von Basen.
Als Verbindungen mit mindestens zwei Carboxylgruppen im Molekül können aliphatische Polycarbonsäuren verwendet werden. Beispiele für diese Polycarbonsäuren sind Glutarsäure, Adipinsäure, Pimelinsäure, Korksäure, Azelainsäure, Sebazinsäure oder dimerisierte bzw. trimerisierte Linolsäure.
Es können aber auch cycloaliphatische Polycarbonsäuren eingesetzt werden, wie beispielsweise Tetrahydrophthalsäure, 4-Methyltetrahydrophthalsäure, Hexahydrophthalsäure oder 4-Methylhexahydrophthalsäure.
Weiterhin können aromatische Polycarbonsäuren Verwendung finden, wie beispielsweise Phthalsäure, Isophthalsäure, Trimellitsäure oder Pyromellitsäure.
Ebenfalls können auch carboxylterminierte Addukte, z.B. von Trimellitsäure und Polyolen, wie beispielsweise Glycerin oder 2,2-Bis-(4-hydroxycyclohexyl)-propan verwendet werden.

II) Polyglycidyl- oder Poly-(β-methylglycidyl)-ether erhältlich durch Umsetzung einer Verbindung mit mindestens zwei freien alkohollschen Hydroxygruppen und/oder phenolischen Hydroxygruppen und einem geeignet substituierten Epichlorhydrin unter alkalischen Bedingungen, oder in Anwesenheit eines sauren Katalysators und anschliessender Alkalibehandlung.
Ether dieses Typs leiten sich beispielsweise ab von acyclischen Alkoholen, wie Ethylenglykol, Diethylenglykol und höheren Poly-(oxyethylen)-glykolen, Propan-1,2-diol, oder Poly-(oxypropylen)-glykolen, Propan-1,3-diol, Butan-1,4-diol, Poly-(oxytetramethylen)-glykolen, Pentan-1,5-diol, Hexan-1,6-diol, Hexan-2,4,6-triol, Glycerin, 1,1,1-Trimethylolpropan, Bistrimethylolpropan, Pentaerythrit, Sorbit, sowie von Polyepichlorhydrinen.
Sie leiten sich aber auch beispielsweise ab von cycloaliphatischen Alkoholen wie 1,3- oder 1,4-Dihydroxycyclohexan, Bis-(4-hydroxycyclohexyl)-methan, 2,2-Bis-(4-hydroxycyclohexyl)-propan oder 1,1-Bis-(hydroxymethyl)-cyclohex-3-en oder sie besitzen aromatische Kerne wie N,N-Bis-(2-hydroxyethyl)-anilin oder p,p'-Bis-(2-hydroxyethylamino)-diphenylmethan.
Die Epoxidverbindungen können sich auch von einkernigen Phenolen ableiten, wie beispielsweise von Resorcin oder Hydrochinon; oder sie basieren auf mehrkernigen Phenolen wie beispielsweise auf Bis-(4-hydroxyphenyl)-methan, 2,2-Bis-(4-hydroxyphenyl)-propan, 2,2-Bis-(3,5-dibrom-4-hydroxyphenyl)-propan, 4,4'-Dihydroxydiphenylsulfon oder auf unter sauren Bedingungen erhaltene Kondensationsprodukte von Phenolen mit Formaldehyd wie Phenol-Novolake.

III) Poly-(N-glycidyl)-Verbindungen erhältlich durch Dehydrochlorierung der Reaktionsprodukte von Epichlorhydrin mit Aminen, die mindestens zwei Aminowasserstoffatome enthalten. Bei diesen Aminen handelt es sich zum Beispiel um Anilin, Toluidin, n-Butylamin, Bis-(4-aminophenyl)-methan, m-Xylylendiamin oder Bis-(4-methylaminophenyl)-methan, aber auch N,N,O-Triglycidyl-m-aminophenol oder N,N,O-Triglycidyl-p-aminophenol.
Zu den Poly-(N-glycidyl)-Verbindungen zählen aber auch N,N'-Diglycidylderivate von Cycloalkylenharnstoffen, wie Ethylenhamstoff oder 1,3-Propylenharnstoff, und N,N'-Diglycidylderivate von Hydantoinen, wie von 5,5-Dimethylhydantoin.

IV) Poly-(S-glycidyl)-Verbindungen wie beispielsweise Di-S-glycidylderivate, die sich von Dithiolen, wie beispielsweise Ethan-1,2-dithiol oder Bis-(4-mercaptomethylphenyl)-ether ableiten.

V) Epoxidverbindungen mit einem Rest der Formel A, worin $R_1$ und $R_3$ zusammen $-CH_2-CH_2-$bedeuten und n 0 ist, sind z. B. Bis-(2,3-epoxycyclopentyl)-ether, 2,3-Epoxycyclopentylglycidylether oder 1,2-Bis-(2,3-epoxycyclopentyloxy)-ethan. Ein Epoxidharz mit einem Rest der Formel A, worin $R_1$ und $R_3$ zusammen $-CH_2-CH_2-$ sind und n 1 bedeutet, ist beispielsweise 3,4-Epoxy-6-methyl-cyclohexancarbonsäure-(3',4'-epoxy-6'-methyl-cyclohexyl)-methylester.

Geeignete Epoxide sind beispielsweise:

a) flüssige Bisphenol-A-diglycidylether wie Araldit®GY 240, Araldit®GY 250, Araldit®GY 260, Araldit®GY 266, Araldit®GY 2600, Araldit®MY 790;
b) feste Bisphenol-A-diglycidylether wie Araldit®GT 6071, Araldit®GT 7071, Araldit®GT 7072, Araldit®GT 6063, Araldit®GT 7203, Araldit®GT 6064, Araldit®GT 7304, Araldit®GT 7004, Araldit®GT 6084, Araldit®GT 1999, Araldit®GT 7077, Araldit®GT 6097, Araldit®GT 7097, Araldit®GT 7008, Araldit®GT 6099, Araldit®GT 6608, Araldit®GT 6609, Araldit®GT 6610;
c) flüssige Bisphenol-F-diglycidylether wie Araldit®GY 281, Araldit®GY282, Araldit®PY 302, Araldit®PY 306;
d) feste Polyglycidylether von Tetraphenylethan wie CG Epoxy Resin®0163;

e) feste und flüssige Polyglycidylether von Phenolformaldehyd Novolak wie EPN 1138, EPN 1139, GY 1180, PY 307;
f) feste und flüssige Polyglycidylether von o-Cresolformaldehyd Novolak wie ECN 1235, ECN 1273, ECN 1280, ECN 1299;
g) flüssige Glycidylether von Alkoholen wie Shell® Glycidylether 162, Araldit®DY 0390, Araldit®DY 0391;
h)flüssige Glycidylether von Carbonsäuren wie Shell®Cardura E Terephthalsäureester, Trimellithsäureester, Araldit®PY 284;
i) feste heterocyclische Epoxidharze (Triglycidylisocyanurat) wie Araldit® PT 810;
j) flüssige cycloaliphatische Epoxidharze wie Araldit®CY 179;
k) flüssige N,N,O-Triglycidylether von p-Aminophenol wie Araldit®MY 0510;
l) Tetraglycidyl-4,4'-methylenbenzamin oder N,N,N',N'-Tetraglycidyldiaminophenylmethan wie Araldit®MY 720, Araldit®MY 721.

Gegebenenfalls kann auch ein Gemisch von Epoxidverbindungen unterschiedlicher Struktur eingesetzt werden.
Die Epoxidverbindungen enthalten mindestens zwei Gruppen der Formel

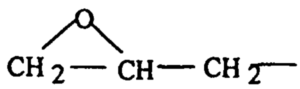

Besonders bevorzugt sind Verbindungen der Typen(I) bis (III) bzw. Mischungen aus diesen

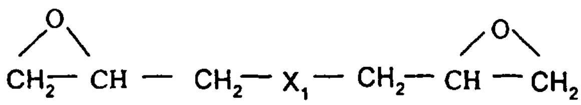
(B)

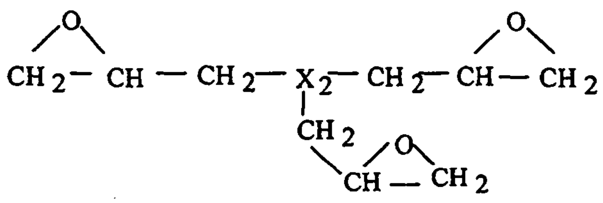
(C)

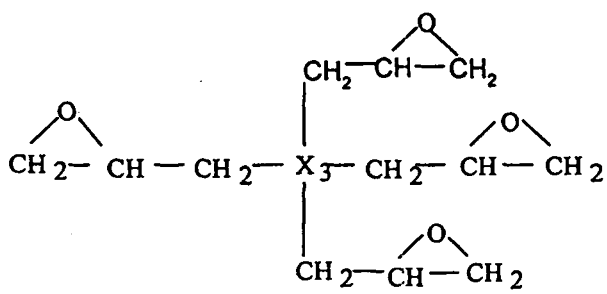
(D)

wobei $X_1$, $X_2$ und $X_3$ Cyclohexylen, Phenylen oder Naphthylen bedeuten, welche unsubstituiert oder substituiert sein können und $X_1$ zusätzlich noch einen unsubstituierten oder substituierten Rest der Formel

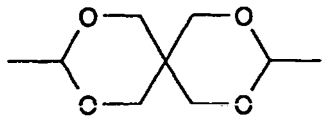

und $X_2$ zusätzlich noch einen unsubstituierten oder substituierten Rest der Formel

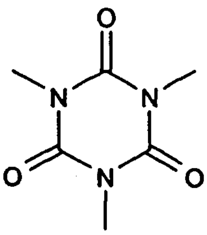

bedeutet.

Als Substituenten für die oben genannten Reste kommen -O-, -S-, -C(O)-, -C(O)O-, -S(O)-, - $S(O_2)$-, -$C(CF_3)_2$-, Alkyl, Alkylen, Aryl, Arylen, Alkoxy, Aryloxy oder Halogen in Frage, wobei auch gleiche oder verschiedene Substituenten mehrfach vorhanden sein können oder die Substituenten selbst wiederum substituiert sein können.

Als Alkylrest kommt beispielsweise ein $C_1$-$C_{18}$-Alkylrest, wie Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl, n-Dodecyl, n-Tridecyl, n-Tetradecyl, n-Hexadecyl oder n-Octadecyl sowie weitere verzweigte Isomere in Betracht.

Mögliche Alkylen- und Alkoxy-reste lassen sich formal von den oben genannten Alkylresten durch Entfernen eines weiteren H-Atomes bzw. Hinzufügen eines O-Atomes ableiten.

Als Arylreste kommen beispielsweise Reste mit 6-20 C-Atomen, wie Phenylen, Biphenylen oder Naphthylen in Frage.

Mögliche Arylen- und Aryloxy-reste lassen sich formal von den oben genannten Arylresten durch Entfernen eines weiteren H-Atomes bzw. Hinzufügen eines O-Atomes ableiten.

Bevorzugt sind Reste der folgenden Formeln:

für $X_1$ =

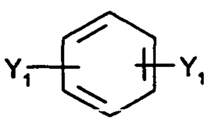

(IVa)

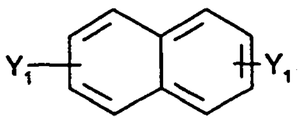

(IVb)

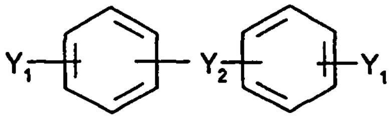

(IVc)

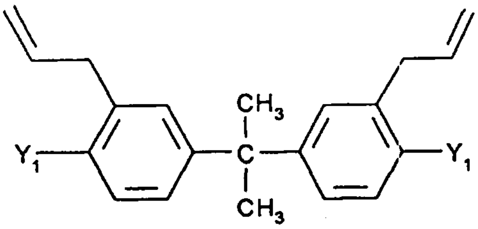

(IVd)

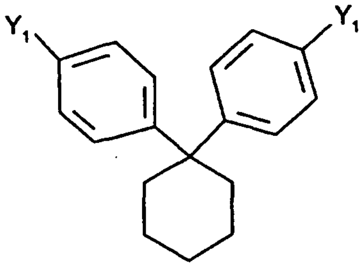

(IVe)

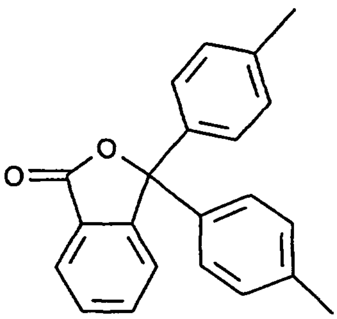

(IVf)

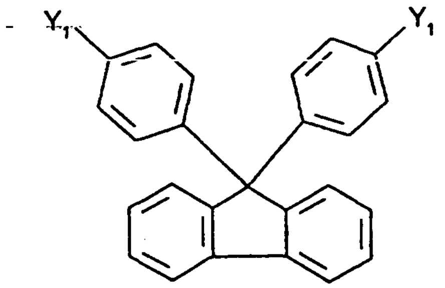

(IVg)

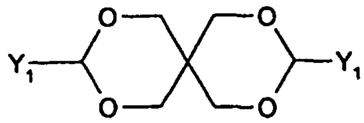

(IVh)

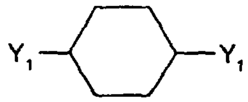

(IVi)

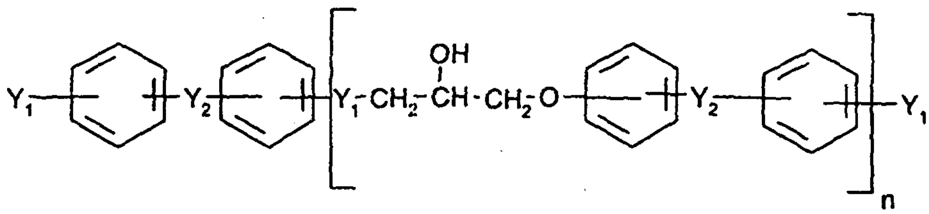

(IVk)

für $X_2$ =

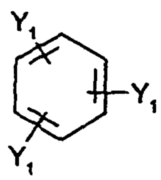

(Va)

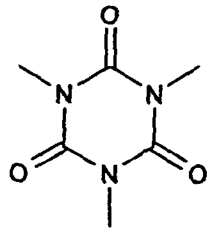

(Vb)

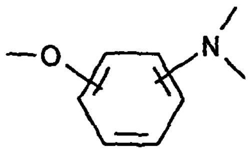

(Vc)

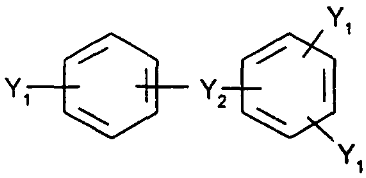

(Vd)

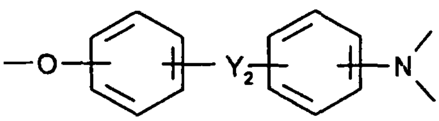

(Ve)

für $X_3$ =

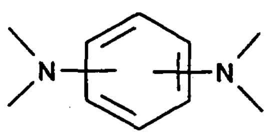

(VIb)

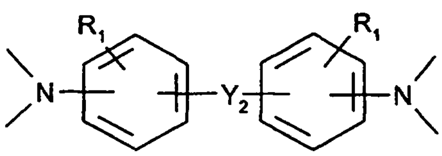

(VIb)

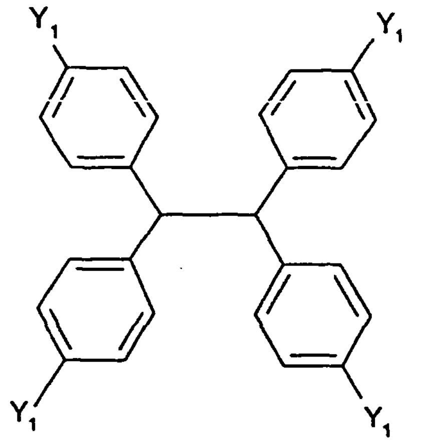

(VIc)

worin $Y_1$ eine direkte Bindung, -O-, -S-, -C(O)O-,
$Y_2$ eine direkte Bindung, $-SO_2-$, -CO-, -S-, -SO-, $CH_2-$, $-C(CH_3)_2-$oder- $C(CF_3)_2-$

und n = 1-10 ist.

Die aromatischen Ringe sind gegebenenfalls ein- oder mehrfach durch Alkyl, Aryl, Alkoxy, Aryloxy oder Halogen, wie oben näher erläutert, substituiert.

Bevorzugt sind aromatische Epoxidverbindungen.

Insbesondere bevorzugt als Epoxidkomponente sind die Verbindungen

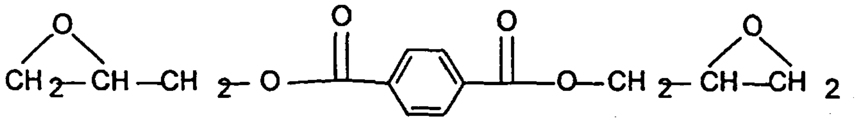

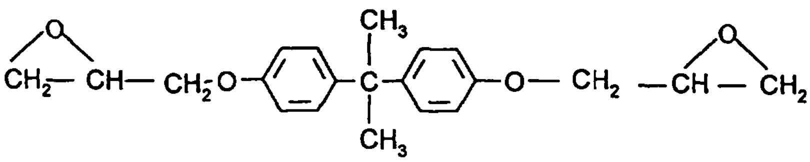

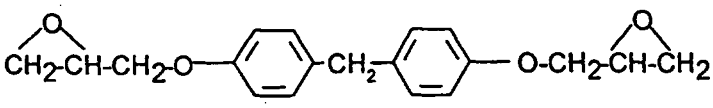 bzw. 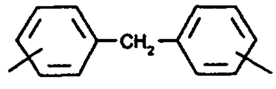

Bisphenol-F

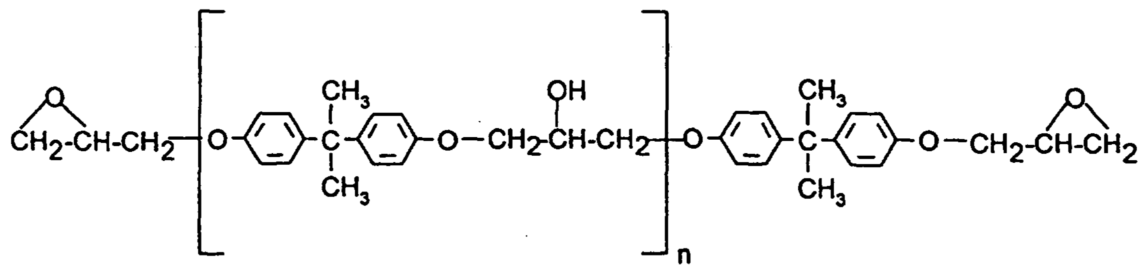

n = 1-10

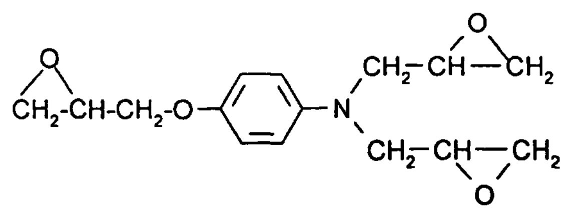

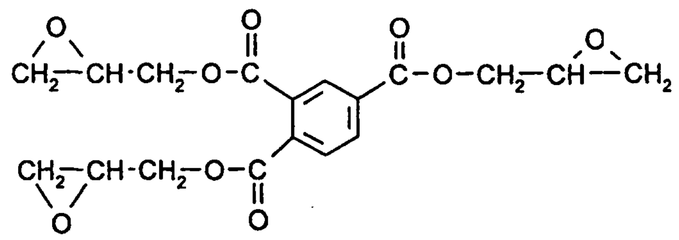

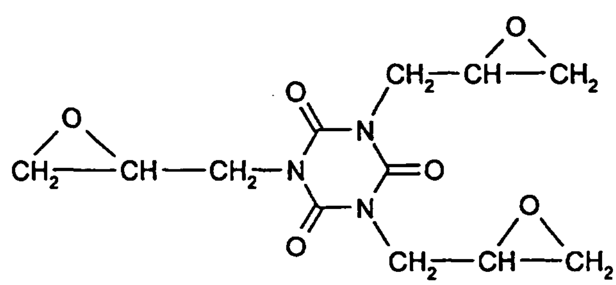

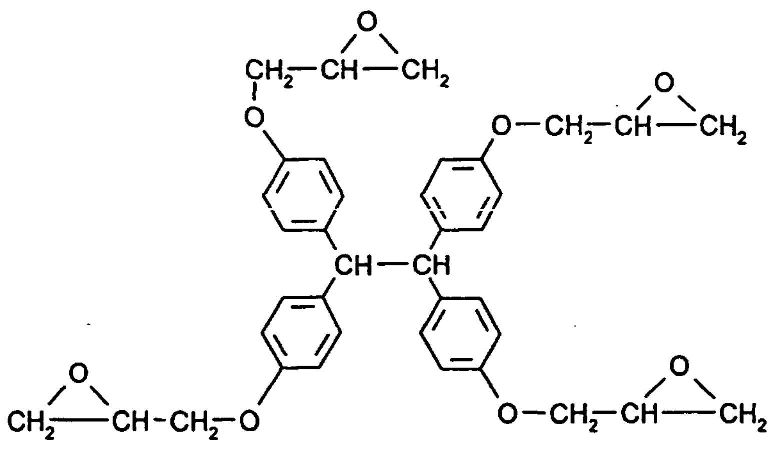

Bevorzugt enthält die Zusammensetzung das di- oder polyfunktionelle (Co)polymer oder (Co)oligomer in einer Menge von 0,1 bis 20 Gew.-%, besonders bevorzugt von 0,5 bis 10 Gew.-% und ganz besonders bevorzugt von 1 bis 3 Gew.-% bezogen auf das Polyolefin oder Vinylpolymere.

Bevorzugt enthält die Zusammensetzung das multifunktionelle Epoxid in einer Menge von 0,01 bis 5 Gew.-%, besonders bevorzugt von 0,1 bis 3 Gew.-% und ganz besonders bevorzugt von 0,5-2 Gew.-% bezogen auf das Polyolefin oder Vinylpolymere.

Das Gewichtsverhältnis von di- oder polyfunktionellem (Co)polymer oder (Co)oligomer zu multifunktionellem Epoxid beträgt bevorzugt von 50:1 bis zu 1:5, besonders bevorzugt von 20:1 bis zu 1:2.

Bevorzugt enthält die Zusammensetzung noch weitere Verarbeitungsstabilisatoren, wie phenolische Antioxidantien, Phosphonate, Phosphite oder Benzofuranone.

Die Antioxidantien vom Typ der sterisch gehinderten Phenole sind allgemein bekannt als Antioxidantien für organische Materialien und werden für die Stabilisierung von Polymeren häufig verwendet. Vorzugsweise enthalten diese Verbindungen mindestens eine Gruppe der Formel(X)

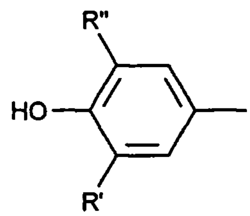 (X)

worin R' Wasserstoff, Methyl oder tert.Butyl und R" gegebenenfalls substituiertes Alkyl oder substituiertes Alkylthioalkyl bedeutet.

Besonders bevorzugt sind Verbindungen, die mindestens eine Gruppe der Formel

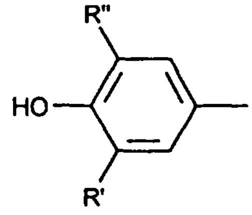 (X)

enthalten, worin R' Methyl oder tert.Butyl und R" gegebenenfalls substituiertes Alkyl oder substituiertes Alkylthioalkyl bedeutet.

Beispiele für solche Phenol-Antioxidantien sind:

1. Alkylierte Monophenole, z.B. 2,6-Di-tert-butyl-4-methylphenol, 2-butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(a-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis-(3,5-di-tert-butyl-4-hydroxyphenyl)adipat.

4. Tocopherole, z.B. α-Tocopherol, β-Tocopherol, γ-Tocopherol, δ-Tocopherol und Mischungen davon (Vitamin E).

5. Hydroxylierte Thiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-dimethyl-4-hydroxyphenyl)-disulfid.

6. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Methylen-bis-[4-methyl-6-(α-methylcyclohexyl)-phenol], 2,2'-Methylen-bis-(4-methyl-6-cyclohexylphenol), 2,2'-Methylen-bis-(6-nonyl-4-methylphenol), 2,2'-Methylen-bis-(4,6-di-tert-butylphenol), 2,2'-Ethyliden-bis-(4,6-di-tert-butylphenol), 2,2'-Ethyliden-bis-(6-tert-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)-butan, 2,6-Bis-(3-tert-butyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methyl-phenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercapto-butan, 1,1,5,5-Tetra-(5-tert-butyl-4-hydroxy-2-methylphenyl)-pentan.

7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-dithioterephthalat, Bis-(3,5-di-tert-butyl-4-hydroxybenzyl)-sulfid, Isooctyl-3,5-di-tert-butyl-4-hydroxybenzyl-mercaptoacetat.

8. Hydroxybenzylierte Malonate, z.B. Dioctadecyl-2,2-bis-(3,5-di-tert-butyl-2-hydroxybenzyl)-malonat, Di-octadecyl-2-(3-tert-butyl-4-hydroxy-5-methylbenzyl)-malonat, Di-dodecyl-mercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.

9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.

10. Triazinverbindunqen, z.B. 2,4-Bis-octylmercapto-6-(3,5-di-tert-butyl-4-hydroxyanilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)- 1,3,5-triazin, 2,4,6-Tris-(3,5-di-tert-butyl-4-hydroxyphenoxy)-1,2,3-triazin, 1,3,5-Tris-(3,5-di-tert-butyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.

11. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

12. Ester der β-(3,5-Di-tert-butyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

13. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

14. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

15. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

16. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N, N'-Bis-(3,5-di-tert-butyl-4-hydroxy-phenylpropionyl)-hydrazin.

Bevorzugt sind die oben unter den Punkten 7, 9, 10, 12, 13, 14 und 16 insbesondere Punkt 7, 9, 10 und 12, aufgeführten Antioxidantien.

Weitere besonders bevorzugte Verbindungen sind:

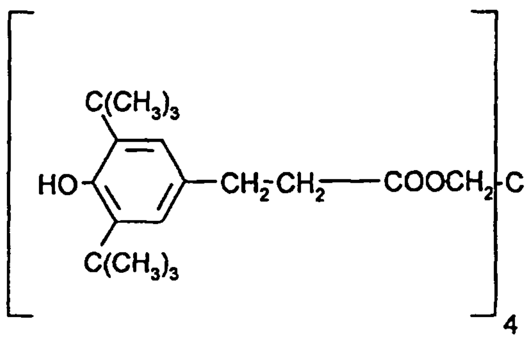

β-(3,5-Di-tert.-butyl-4-hydroxyphenyl) propionsäureester von Pentaerythrit

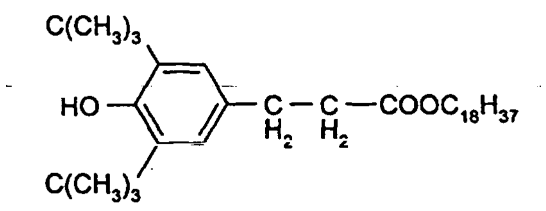

β-(3,5-Di-tert.-butyl-4-hydroxyphenyl) propionsäureoctadecylester

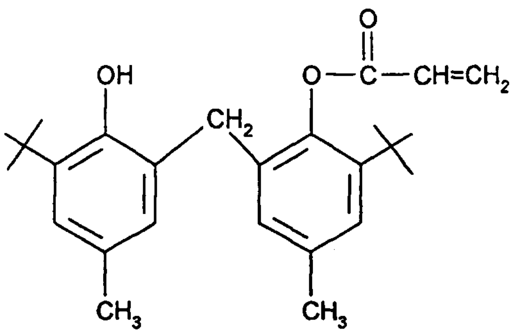

{2-Propensäure-2-(1,1-dimethylethyl)-6-[[3-(1,1-dimethylethyl)-2-hydroxy-5-methylphenyl]-methyl]-4-methylphenylester};

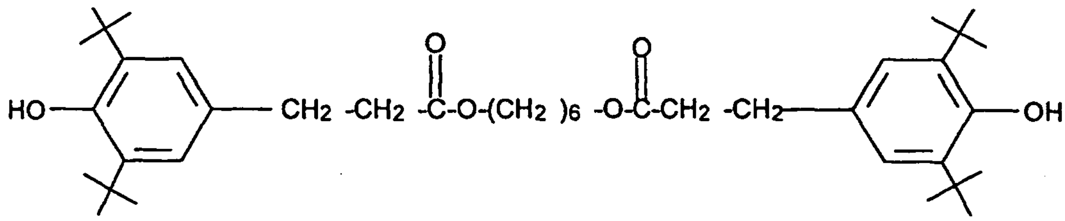

{3,5-Bis(1,1-dimethyl-ethyl)-4-hydroxy-phenylpropansäure-1,6-hexandiylester};

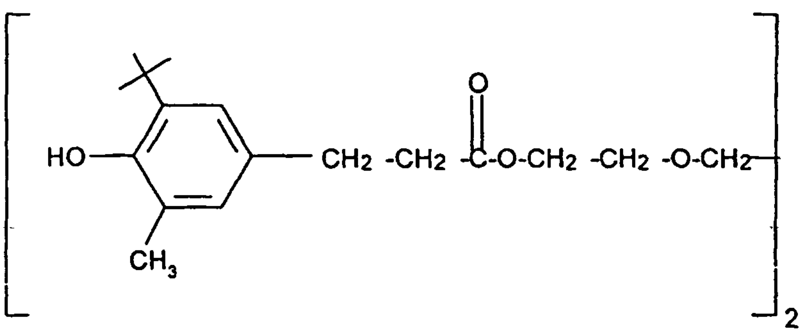

{3-(1,1-Dimethylethyl)-4-hydroxy-5-methyl-phenylpropansäure-1,2-ethandiylbis(oxy-2,1-ethandiyl)ester};

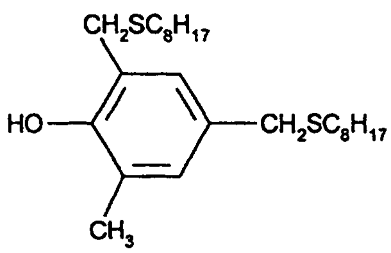

{2-Methyl-4,6-bis[(octylthio)methyl]-phenol};

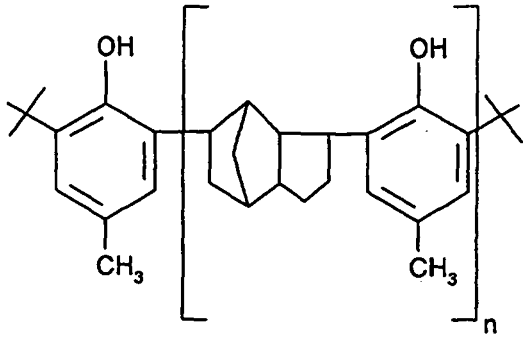

Butyliertes Reaktionsprodukt von para Kresol und Dicyclopentadien (mittleres Molekulargewicht 600-700)

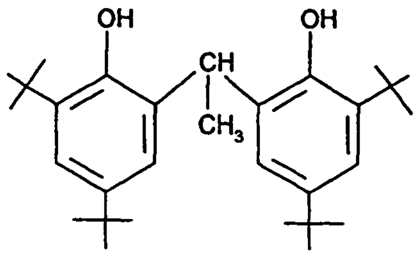

{2,2'-Ethyliden-bis-(4,6-di-tert.butylphenol)};

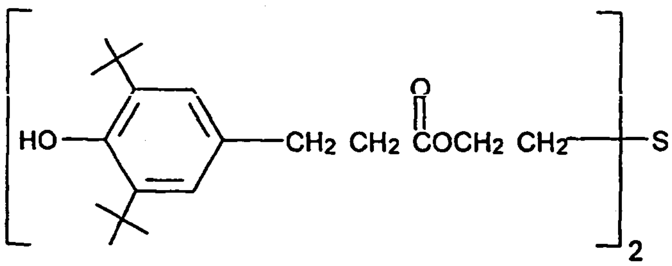

{3,5-Bis(1,1-dimethylethyl)-4-hydroxy-phenylpropansäure-thiodi-2,1-ethandiylester};

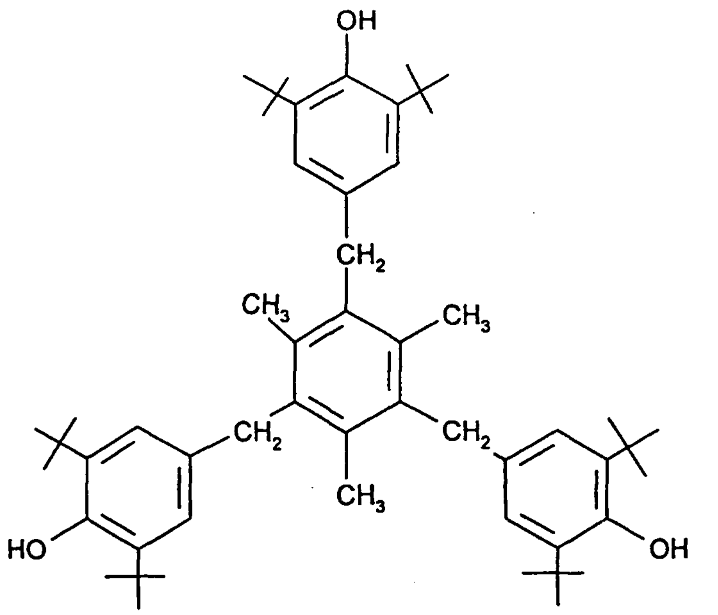

{4,4',4"-[(2,4,6-Trimethyl-1,3,5-phenyltriyl)tris-(methylen)]tris[2,6-bis(1,1-dimethylethyl)phenol]};

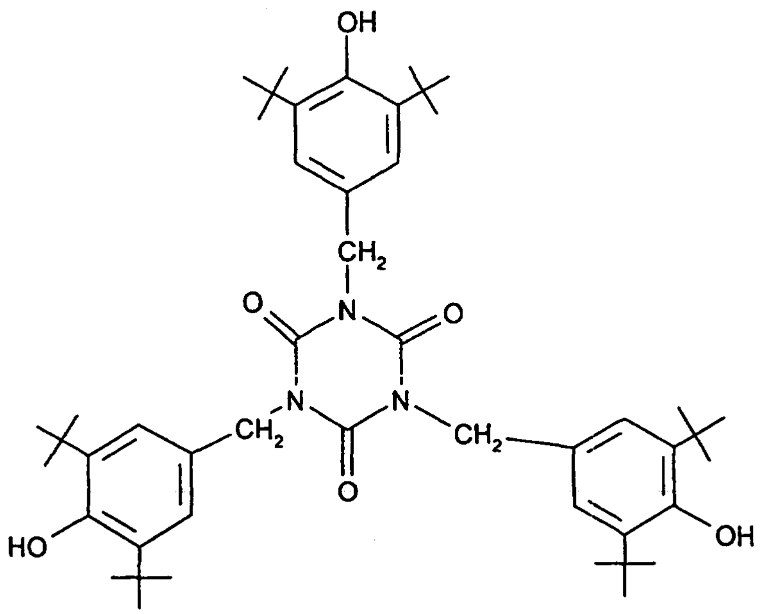

{1,3,5-Tris[[3,5-bis(1,1-dimethylethyl)-4-hydroxyphenyl]methyl]-1,3,5-triazin-2,4,6(1H,3H,5H)-trion}.

Beispiele für Phosphonate sind solche der Formel I

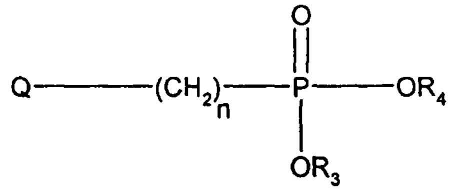

(I) ,

worin

$R_3$ H, $C_1$-$C_{20}$-Alkyl, unsubstituiertes oder durch $C_1$-$C_4$-Alkyl substituiertes Phenyl oder Naphthyl bedeutet,
$R_4$ Wasserstoff, $C_1$-$C_{20}$-Alkyl, unsubstituiertes oder durch $C_1$-$C_4$-Alkyl substituiertes Phenyl oder Naphthyl; oder $M^{r+}$ / r darstellt,
r+ M ein r-wertiges Metallkation oder das Ammoniumion ist,
n 0, 1, 2, 3, 4, 5 oder 6 bedeutet, und
r 1, 2, 3 oder 4 darstellt;
Q Wasserstoff, -X-C(O)-$OR_7$, oder einen Rest

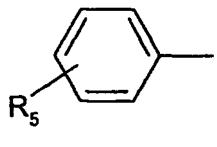
,

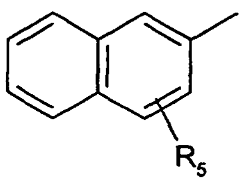
,
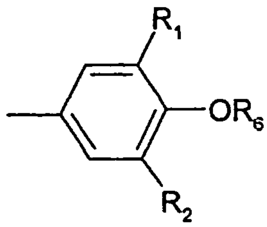

bedeutet,
$R_1$ iso-Propyl, tert-Butyl, Cyclohexyl oder mit 1-3 $C_1$-$C_4$-Alkylgruppen substituiertes Cyclohexyl bedeutet,
$R_2$ Wasserstoff, $C_1$-$C_4$-Alkyl, Cyclohexyl oder mit 1-3 $C_1$-$C_4$-Alkylgruppen substituiertes Cyclohexyl darstellt,
$R_5$, H, $C_1$-$C_{18}$-Alkyl, OH, Halogen oder $C_3$-$C_7$-Cycloalkyl ist;
$R_6$ H, Methyl, Trimethylsilyl, Benzyl, Phenyl, Sulfonyl oder $C_1$-$C_{18}$-Alkyl ist;
$R_7$ H, $C_1$-$C_{10}$-Alkyl oder $C_3$-$C_7$-Cycloalkyl ist;und
X Phenylen, mit $C_1$-$C_4$-Alkylgruppen substituiertes Phenylen oder Cyclohexylen bedeutet.

Bevorzugt sind sterisch gehinderte Hydroxyphenyl-alkyl-phosphonsäureester bzw. -halbester wie sie beispielsweise aus US-A-4778840 bekannt sind.
Besonders bevorzugt sind Verbindungen der Formel Ia

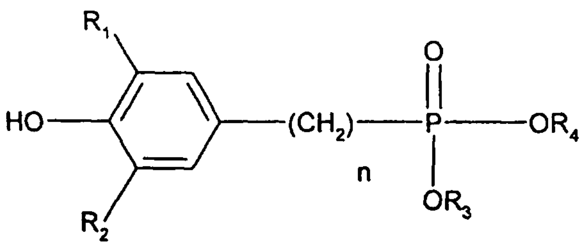
(Ia)

worin

$R_1$ H, iso-Propyl, tert-Butyl, Cyclohexyl oder mit 1-3 $C_1$-$C_4$-Alkylgruppen substituiertes Cyclohexyl bedeutet,
$R_2$ Wasserstoff, $C_1$-$C_4$-Alkyl, Cyclohexyl oder mit 1-3 $C_1$-$C_4$-Alkylgruppen substituiertes Cyclohexyl bedeutet,
$R_3$ $C_1$-$C_{20}$-Alkyl, unsubstituiertes oder durch $C_1$-$C_4$-Alkyl substituiertes Phenyl oder Naphthyl bedeutet,
$R_4$ Wasserstoff, $C_1$-$C_{20}$-Alkyl, unsubstituiertes oder durch $C_1$-$C_4$-Alkyl substituiertes Phenyl oder Naphthyl; oder $M^{r+}$ / r darstellt,

M ein r-wertiges Metallkation ist,
n 1, 2, 3, 4, 5 oder 6 bedeutet, und
r 1, 2, 3 oder 4 darstellt.

Halogen bedeutet Fluor, Chlor, Brom oder Iod.

Bedeuten Substituenten Alkyl mit bis zu 18 Kohlenstoffatomen, so kommen hierfür die Reste wie Methyl, Ethyl, Propyl, Butyl, Pentyl, Hexyl und Octyl, Stearyl sowie entsprechende verzweigte Isomere in Frage, bevorzugt sind $C_2$-$C_4$-Alkyl.

Durch $C_1$-$C_4$-Alkyl substituiertes Phenyl oder Naphthyl, das vorzugsweise 1 bis 3, insbesondere 1 oder 2 Alkylgruppen enthält, bedeutet beispielsweise o-, m- oder p-Methylphenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-butylphenyl, 2-Ethylphenyl, 2,6-Diethylphenyl, 1-Methylnaphthyl, 2-Methylnaphthyl, 4-Methylnaphthyl, 1,6-Dimethylnaphthyl oder 4-tert-Butylnaphthyl.

Durch $C_1$-$C_4$-Alkyl substituiertes Cyclohexyl, das vorzugsweise 1 bis 3, insbesondere 1 oder 2 verzweigte oder unverzweigte Alkylgruppen-Reste enthält, bedeutet beispielsweise Methylcyclohexyl, Dimethylcyclohexyl, Trimethylcyclohexyl oder tert-Butylcyclohexyl.

Ein ein-, zwei-, drei- oder vier-wertiges Metallkation ist vorzugsweise ein Alkalimetall-, Erdalkalimetall-, Schwermetall- oder Aluminium-Kation, beispielsweise $Na^+$, $K^+$, $Mg^+$, $Ca^{++}$, $Ba^{++}$, $Zn^{++}$, $Al^{+++}$, oder $Ti^{++++}$. Speziell bevorzugt ist $Ca^{++}$.

Bevorzugte Verbindungen der Formel I sind diejenigen, welche mindestens eine tert-Butylgruppe als Rest $R_1$ oder $R_2$ aufweisen. Ganz besonders bevorzugt sind Verbindungen worin $R_1$ und $R_2$ gleichzeitig tert-Butyl bedeutet.

Bevorzugt bedeutet n 1 oder 2 und ganz besonders bevorzugt 1.

Ebenfalls bevorzugt sind die Verbindungen der Formel II, III, IV, V und VI

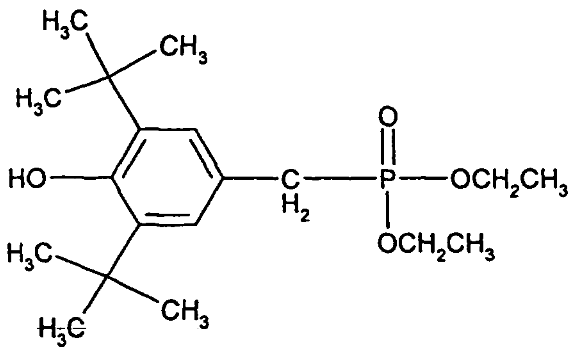

,

(II)

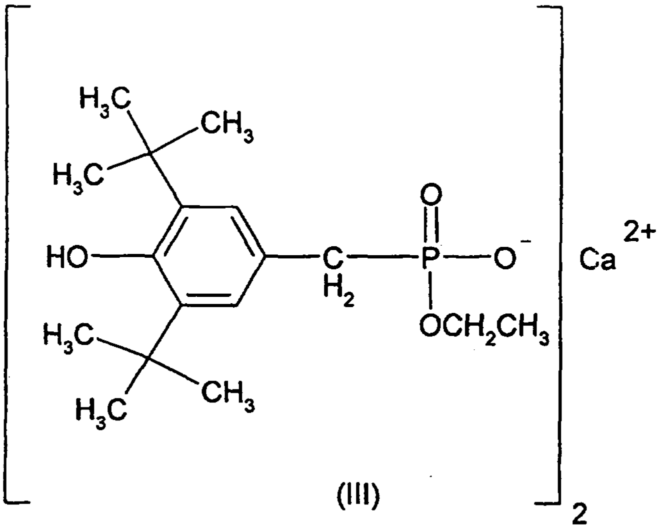

(III)

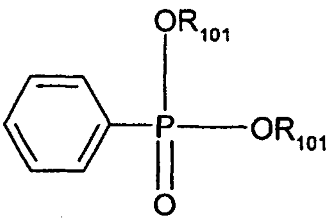

(IV)

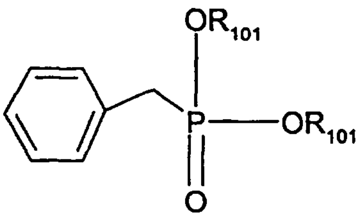

(V),

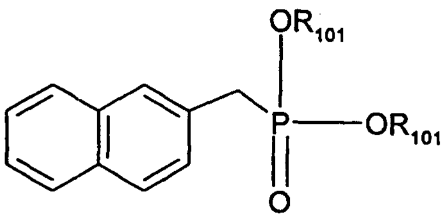

(VI),

worin die $R_{101}$ unabhängig voneinander Wasserstoff oder $M^{r+}$ / r bedeuten. Bedeutungen für $M^{r+}$ / r sind bereits vorstehend angegeben

Die Verbindung der Formel II ist im Handel unter dem Namen Irganox®1222 (Ciba Spezialitätenchemie) und diejenige der Formel III unter dem Namen Irganox®1425 (Ciba Spezialitätenchemie) erhältlich.

Die Verbindungen IV, V und VI sind teilweise im Handel erhältlich oder nach Standardverfahren herstellbar.

Besonders bevorzugte Phosphonate sind Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters. Ganz besonders bevorzugt ist Diethyl-3,5-di-tert-butyl-4-hydroxybenzylphosphonat .

Die organischen Phosphite und Phosphonite sind ebenfalls als Stabilisatoren für Kunststoffe bekannt. Sie werden insbesondere als Verarbeitungsstabilisatoren für Polyolefine verwendet.

Es handelt sich hierbei vorwiegend um aromatische Phosphite und Phosphonite. Beispiele hierfür sind Triphenylphosphit, Diphenylalkylphosphite, Phenyldialkylphosphite, Tris(diphenylalkylphosphit)amine, Tris-(nonylphenyl)-phosphit, Trilaurylphosphit, Trioctadecylphosphit, Distearyl-pentaerythritdiphosphit, Tris-(2,4-di-tert.butylphenyl)-phosphit, Bis-(2,4-di-tert.butylphenyl)-pentaerythritdiphosphit, Tristearyl-sorbit-triphosphit, Tetrakis-(2,4-di-tert.butylphenyl)-4,4'-biphenylen-diphosphonit, 3,9-Bis-(2,4-di-tert.butyl-4-methylphenoxy)-2,4,8,10-tetraoxa-3,9-diphosphaspiro[5.5]undecan, 3,9-Tris-(2,4,6-tris-tert.butylphenoxy)-2,4,8,10-tetraoxa-3,9-diphosphaspiro[5,5]undecan, 2,4,6-Tris tert.-butylphenyl-2-butyl-2 ethyl-1,3-propandiolphosphit und 2,2'-Ethyliden-bis-(4,6-di-tert.butylphenyl)-fluorophosphit.

Besonders bevorzugt werden die folgenden Phosphite verwendet: Tris-(2,4-di-tert.butylphenyl)-phosphit,

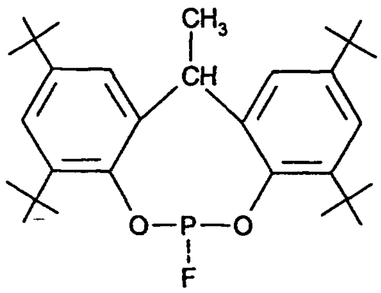

,

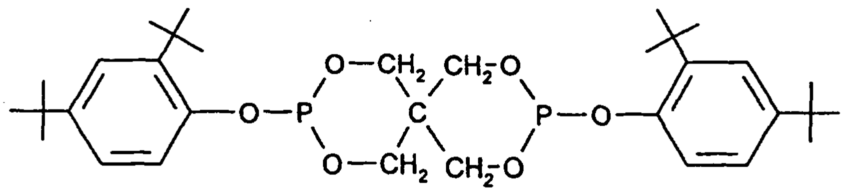

;

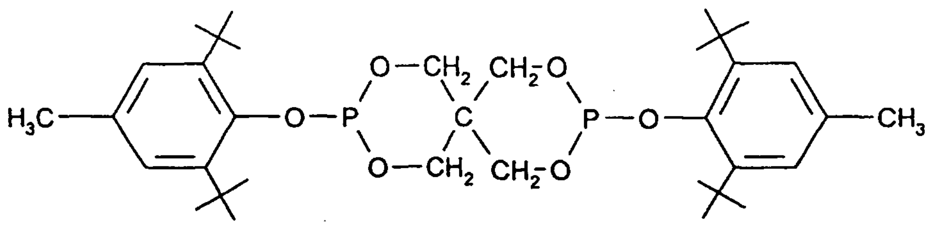

;

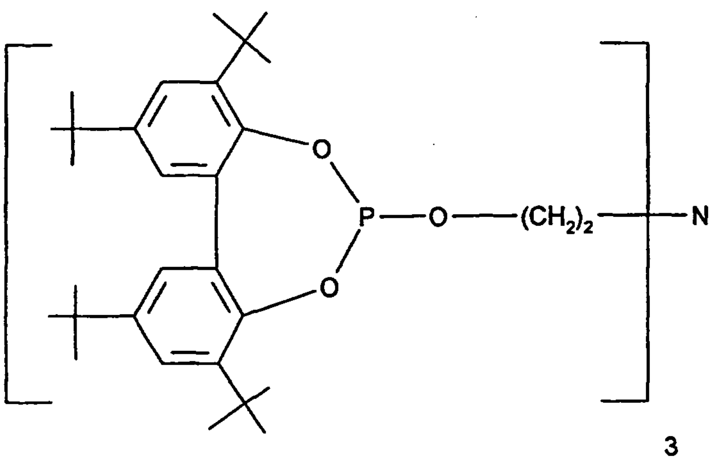

;

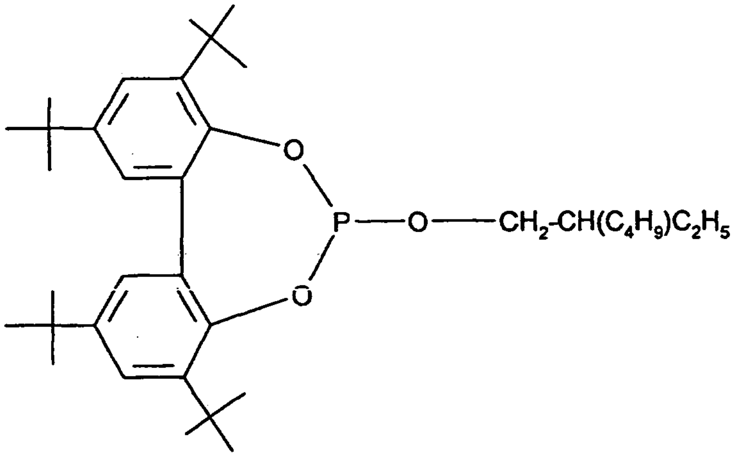

;

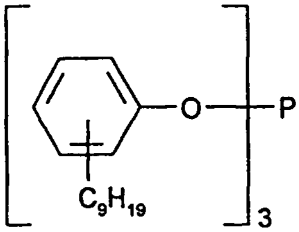

;

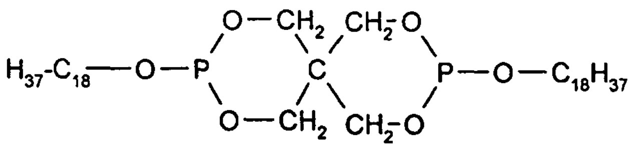

;

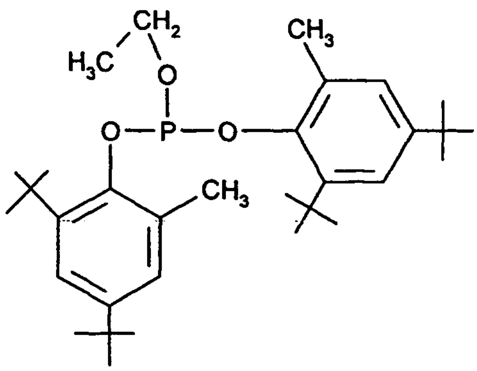

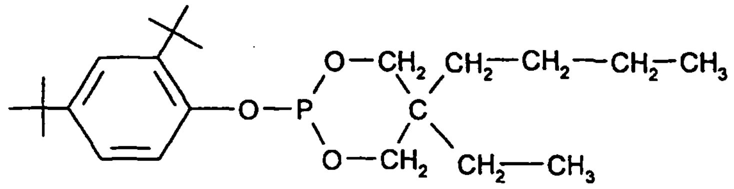

Ganz besonders bevorzugt verwendet man Tris-(2,4-di-tert.butylphenyl)-phosphit.

Benzofuranone bzw. Indolinone sind z.B. in U.S. 4,325,863; U.S. 4,338,244; U.S. 5,175,312, U.S. 5,216,052; U.S. 5,252,643; DE-A-4316611; DE-A-4316622; DE-A-4316876; EP-A-0589839 oder EP-A-0591102 beschrieben. Bevorzugt handelt es sich um 3-[4-(2-Acetoxyethoxy)phenyl]-5,7-di-tert-butyl-benzofuran-2-on, 5,7-Di-tert-butyl-3-[4-(2-stearoyloxyethoxy)-phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on, 3-(3,4-Dimethylphenyl)-5,7-di-tert-butyl-benzofuran-2-on, oder 3-(2,3-Dimethylphenyl)-5,7-di-tert-butyl-benzofuran-2-on.

Neben den vorstehend erwähnten Verarbeitungsstabilisatoren können noch weitere Additive enthalten sein. Beispiele hierfür sind nachstehend genannt.

<u>UV-Absorber und Lichtschutzmittel</u>

<u>2-(2'-Hydroxyphenyl)-benzotriazole,</u> wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tert-butyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(a,a-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxyphenyl]-benzotriazol mit Polyethylenglycol 300; $\left[R-CH_2CH_2-COO-CH_2CH_2\right]_2$ mit R = 3'-tert-Butyl-4'-hydroxy-5'-2H-benzotriazol-2-yl-phenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.

<u>2-Hydroxybenzophenone,</u> wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

<u>Ester von gegebenenfalls substituierten Benzoesäuren</u>, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.

<u>Acrylate,</u> wie z.B. α-Cyan-β,β-diphenylacrylsäure-ethylester bzw. -isooctylester, α-Carbomethoxy-zimtsäure-methylester, α-Cyano-β-methyl-p-methoxy-zimtsäuremethylester bzw. - butylester, α-Carbomethoxy-p-methoxy-zimtsäure-methylester, N-(β-Carbomethoxy-β-cyanovinyl)-2-methyl-indolin.

<u>Nickelverbindungen,</u> wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methylphenyl-undecylketoxim, Nickelkomplexe des 1-Phenyl-4-lauroyl-5-hydroxy-pyrazols, gegebenenfalls mit zusätzlichen Liganden.

<u>Sterisch gehinderte Amine,</u> wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-butyl-4-hydroxybenzyl-malonsäure-bis(1 ,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-a-olefin-copolymer und 2,2,6,6-Tetramethyl-4-aminopiperidin oder 1,2,2,6,6-Pentamethyl-4-aminopiperidin.

Oxalsäurediamide, wie z.B. 4,4'-Di-octyloxy-oxanilid, 2,2'-Diethoxy-oxanilid, 2,2'-Di-octyloxy-5,5'-di-tert-butyloxanilid, 2,2'-Di-dodecyloxy-5,5'-di-tert-butyl-oxanilid, 2-Ethoxy-2'-ethyloxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin, 2-[4-(dodecyloxy/tridecyloxy-2-hydroxypropoxy)-2-hydroxy-phenyl]-4,6-bis (2,4-dimethylphenyl)-1,3,5-triazin, 2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.

Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis (benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

Nukleierungsmittel, wie z.B. anorganische Stoffe wie z.B. Talk, Metalloxide wie Titandioxid oder Magnesiumoxid, Phosphate, Carbonate oder Sulfate von vorzugsweise Erdalkalimetallen; organische Verbindungen wie Mono- oder Polycarbonsäuren sowie ihre Salze wie z.B. 4-tert-Butylbenzoesäure, Adipinsäure, Diphenylessigsäure, Natriumsuccinat oder Natriumbenzoat; polymere Verbindungen wie z.B. ionische Copolymerisate ("Ionomere").

Füllstoffe und Verstärkungsmittel, wie z.B. Calciumcarbonat, Silikate, Glasfasern, Glaskugeln, Talk, Kaolin, Glimmer, Bariumsulfat, Metalloxide und -hydroxide, Ruß, Graphit, Holzmehl und Mehle oder Fasern anderer Naturprodukte, synthetische Fasern.

Sonstige Zusätze, wie z.B. Weichmacher, Gleitmittel, Emulgatoren, Pigmente, Rheologieadditive, Katalysatoren, Verlaufshilfsmittel, Optische Aufheller, Flammschutzmittel, Antistatika, Treibmittel.

Insbesondere bevorzugt ist eine vorstehend beschriebene Zusammensetzung, enthaltend

a) ein Polyolefin Kunststoff-Recyclat aus gebrauchten Kunststoffkraftstoffbehältern;
b) mindestens ein di- oder polyfunktionelles Polysiloxan, wobei die funktionelle Gruppe eine Epoxygruppe oder eine Amingruppe ist und
c) mindestens ein phenolisches Antioxidans, Phosphonat, Phosphit, Benzofuranon oder Kombinationen daraus.

Ein weiterer Gegenstand der Erfindung ist ein Verfahren zur Erhöhung des Molekulargewichts und/oder zur Verbesserung der mechanischen Eigenschaften von Polyolefin oder Vinylpolymeren, dadurch gekennzeichnet, dass man dem Polyolefin oder Vinylpolymeren mindestens ein di- oder polyfunktionelles (Co)polymer oder (Co)oligomer mit einer Glastemperatur von weniger als 10° C zusetzt, welches ausgewählt wird aus der Gruppe bestehend aus Polysiloxanen und Butadien-Acrylnitril-Copolymeren, die jeweils an den Kettenenden durch Amin-, Oxiran- oder Vinylgruppen funktionalisiert sind; und weiterhin ein multifunktionelles Epoxid zusetzt, welches verschieden ist von dem di- oder polyfunktionellen (Co)polymer oder (Co)oligomer mit einer Epoxygruppe.

Wenn es sich bei dem Polymeren um ein Recyclat handelt kann auf den Zusatz des multifunktionellen Epoxids verzichtet werden. Für die Zusätze gelten die vorstehend genannten Definitionen und Bevorzugungen.

Der Zusatz zum Polyolefin und Vinylpolymeren kann in allen üblichen Mischgeräten erfolgen, bei denen das Polymer aufgeschmolzen und mit den Additiven durchmischt wird. Geeignete Geräte sind dem Fachmann bekannt, es handelt sich dabei um Mischer, Kneter und Extruder.

Bevorzugt wird das Verfahren so durchgeführt, dass der Zusatz während der Verarbeitung in einem Extruder erfolgt.

Werden mehrere Komponenten zugesetzt, so können diese vorgemischt oder einzeln zugegeben werden.

Bevorzugt wird das Verfahren so durchgeführt, dass die maximale Massetemperatur der Schmelze von 180° bis 320° C beträgt.

Die Erhitzung oberhalb des Schmelz- bzw. Glaspunktes wird im allgemeinen bis zu einer homogenen Verteilung der Mischung unter Rühren durchgeführt. Die Temperatur richtet sich dabei nach dem verwendeten Polymer. Vorzugsweise arbeitet man etwa 50°C bis 100°C oberhalb der Schmelztemperatur bzw. Glastemperatur.

Bevorzugt ist das Verarbeitungsgerät ein Einschneckenextruder, Doppelschneckenextruder, Planetenwalzenextruder, Ringextruder oder Kokneter mit mindestens einer Entgasungszone, an welche ein Unterdruck angelegt ist.

Bevorzugt ist ein Verfahren, welches dadurch gekennzeichnet ist, dass ein Unterdruck von weniger als 250 mbar, besonders bevorzugt von weniger als 100 mbar und ganz besonders bevorzugt von weniger als 50 mbar an die Entgasungszone angelegt wird.

Ebenfalls bevorzugt ist ein Verfahren welches dadurch gekennzeichnet ist, dass das Verarbeitungsgerät ein dichtkämmender ineinandergreifender Doppelschneckenextruder oder Ringextruder mit gleichsinnig drehenden Schnecken und mit einer Einzugszone, einer Aufschmelzzone, mindestens einer Entgasungszone und einer Austragszone ist, wobei die Entgasungszone von der Aufschmelzzone oder von einer weiteren Entgasungszone durch einen Schmelzpfropf getrennt ist.

Diese Trennung durch einen Schmelzpfropf kann beispielsweise durch eine Kombination von einem Knet- und einem rückfördernden Schneckenelement bewirkt werden.

Ebenfalls Gegenstand der Erfindung sind Polyolefin oder Vinylpolymer Kunststoffartikel erhältlich nach dem vorstehend genannten Verfahren.

Ein weiterer Gegenstand der Erfindung ist die Verwendung eines di- oder polyfunktionellen (Co)polymers oder (Co)oligomers mit einer Glastemperatur von weniger als 10° C, welches ausgewählt wird aus der Gruppe bestehend aus Polysiloxanen und Butadien-Acrylnitril-Copolymeren, die jeweils an den Kettenenden durch Amin-, Oxiran- oder Vinylgruppen funktionalisiert sind und eines multifunktionellen Epoxids, welches verschieden ist von dem di- oder polyfunktionellen (Co)polymer oder (Co)oligomer mit einer Epoxygruppe, zur Erhöhung des Molekulargewichts und/oder zur Verbesserung der mechanischen Eigenschaften von Polyolefinen und Vinylpolymeren.

Die nachfolgenden Beispiele erläutern die Erfindung.

<u>Verwendetes Kunststoffrecyclat für Beispiele 1 und 2</u>

HDPE-Recyclat aus unbeschichteten Benzin-KKB, vorgereinigt durch Lösungsmittelextraktion und einer zusätzlichen Behandlung durch Extrusion, Schmelzefiltration (100 um) und anschliessender Granulation.

<u>Beispiel 1. Eigenschaftsverbesserung von Polyethylen-Recyclat:</u>

Jeweils 1,4 kg der in Tab. 1 aufgeführten Zusammensetzungen werden unter Vakuum (3 mbar) bei 240°C und 80 U / min. in einem Zweischneckenkneter ZSK 25 verarbeitet (Durchsatz 5,0 kg / h). Alle Rezepturbestandteile werden zu Beginn zusammen als Vormischung aufgegeben. Die Polymerschmelze wird durch eine einfache Lochdüse (Ø = 2,8 mm) zu einem Strang extrudiert; dieser wird nach Verfestigung durch Kühlung im Wasserbad granuliert. Der Schmelzindex des Granulats wird mit Hilfe eines Schmelzindexprüfgeräts Göttfert MP-D (ISO 1133) gemessen. Anschließend wird das Material in einer Spritzgießmaschine zu Schlagzugstäben nach DIN 53448, Form A, und gekerbten Parallelstäben nach ISO 180, 1A verarbeitet.

Die Teststäbe werden mechanisch geprüft auf:

- Zugfestigkeit

• Kerbschlagzähigkeit nach IZOD bei - 40°C (Kälteschlagzähigkeit)

Tab. 1

| Probe | Zusätze | MFR (190°C/21.6 kg) | Kerbschlagzähigkeit nach IZOD bei -40°C [KJ / m2] | Zugfestigkeit [N/mm2] |
|---|---|---|---|---|
| Vergleichsmuster | 0,1 % Irganox® 1010<br>0,1 % Irgafos® 168 | 6,6 | 55,5 | 29,9 |
| | 0,35 % Araldit® GT7072<br>2,0 % Tegomer® E-Si 2330 | 4,0 | 74,0 | 31,6 |
| 1 | 0,0375 % Irganox® 1010<br>0,0375 % Irgafos® 168<br>0,015 % Ca-stearat<br>0,06 % Ca-oxid | | | |
| 2 | 0,35 % Araldit® GT7072<br>3,0% Tegomer® E-Si 2330<br>0,0375 % Irganox® 1010<br>0,0375 % Irgafos® 168<br>0,015 % Ca-stearat<br>0,06 % Ca-oxid | 5,3 | 74,4 | 33,0 |
| 3 | 0,5 % Araldit® MT 0163<br>2,0 % Tegomer® A-Si 2322<br>0,2 % Irganox® B 225 | 4,1 | 84,0 | 32,7 |

Beispiel 2. Eigenschaftsverbesserung von Polyethylen-Recyclat:

Jeweils 2,0 kg der in Tab. 2 aufgeführten Polyethylenproben werden unter Vakuum (260 mbar) bei 260-270°C und 120 U / min. in einem Zweischneckenkneter ZSK 25 verarbeitet (Durchsatz 5,0 kg / h). Alle Rezepturbestandteile werden zu Beginn zusammen als Vormischung aufgegeben. Die Polymerschmelze wird durch eine einfache Lochdüse zu einem Strang extrudiert; dieser wird nach Verfestigung durch Kühlung im Wasserbad granuliert. Anschließend wird das Material in einer Spritzgießmaschine zu Schlagzugstäben nach DIN 53448, Form A verarbeitet.

Tab. 2

| Probe | Zusätze | Schlagzugzähigkeit [KJ/m$^2$] | Reißdehnung [%] |
|---|---|---|---|
| Vergleichsmuster | keine | 384 | 73 |
| 4 | 0,35 % Araldit® GT7072<br>0,0375 % Irganox® 1010<br>0,0375 % Irgafos® 168<br>0,015 % Ca-stearat<br>0,06 % Ca-oxid<br>1,0 % Hycar® ATBN 1300 x 21 | 590 | 153 |

(fortgesetzt)

| Probe | Zusätze | Schlagzugzähigkeit [KJ/m²] | Reißdehnung [%] |
|---|---|---|---|
| Vergleichsmuster | keine | 384 | 73 |
| 5 | 0,35 % Araldit® GT7072<br>0,0375 % Irganox® 1010<br>0,0375 % Irgafos® 168<br>0,015 % Ca-stearat<br>0,06 % Ca-oxid<br>1,0 % Hycar® ATBN 1300 x 45 | 476 | 115 |
| 6 | 0,5 % Araldit® MT 0163<br>1,0 % Hycar® ATBN 1300 x 45<br>0,2 % Irganox® B 225 | 482 | 112 |

Beispiel 3: Molekulargewichtsaufbau von Polyethylen Neumaterial (HDPE)

Verwendetes Polymer: Hostalen® GM6255 mit MFR (190/21,6) = 6,3 g/10 Min der Fa. Hostalen Polyethylen GmbH

Jeweils 2 kg der in Tab. 3 aufgeführten Zusammensetzungen werden bei max. 254°C und 100 U/Min mit 4 kg/h in einem Zweischneckenextruder ZSK25 verarbeitet. Alle Rezepturbestandteile werden als Vormischung aufgegeben. Die Polymerschmelze wird durch eine einfache Lochdüse (d=2,8 mm) zu einem Strang extrudiert; dieser wird nach Verfestigung durch Kühlung in einem Wasserbad granuliert. Der Schmelzindex (MFR) des Granulats wird mit Hilfe eines Prüfgerätes Göttfert MP-D nach ISO 1133 gemessen. Die Ergebnisse sind in Tab. 3 zusammengefaßt.

Tab. 3

| Probe | Rezeptur | MFR (190/21,6) [g/10 Min] |
|---|---|---|
| 7 | Hostalen® GM6255 | 6,05 |
| 8 | Hostalen GM6255<br>2% Tegomer A-Si 2322<br>0,5% Araldit MT0163 | 5,42 |

Beispiel 4: Molekulargewichtsaufbau von Polypropylen Neumaterial

Verwendetes Polymer: Novolen® 1106 mit MFR (230/2,16): 1,94 g/10 Min der Fa. Targor GmbH Jeweils 2 kg der in Tab. 4 aufgeführten Zusammensetzungen werden bei max. 234°C und 100 U/Min mit 4 kg/h in einem Zweischnekkenextruder ZSK25 verarbeitet. Alle Rezepturbestandteile werden als Vormischung aufgegeben. Die Polymerschmelze wird durch eine einfache Lochdüse (d=2,8 mm) zu einem Strang extrudiert; dieser wird nach Verfestigung durch Kühlung in einem Wasserbad granuliert. Der Schmelzindex (MFR) des Granulats wird mit Hilfe eines Prüfgerätes Göttfert MP-D nach ISO 1133 gemessen. Die Ergebnisse sind in Tab. 4 zusammengefaßt.

Tab. 4

| Probe | Rezeptur | MFR (230/2,16) [g/10 Min] |
|---|---|---|
| 9 | Novolen® 1106 | 2,33 |
| 11 | Novolen 1106 3% Hycar ATBN 1300x21<br>0,5% Araldit MT0163 | 1,78 |

Beispiel 5: Eigenschaftsverbesserung von Polypropylen Neumaterial

Verwendetes Polymer: Novolen® 1106 mit MFR (230/2,16): 1,94 g/10 Min der Fa. Targor GmbH Jeweils 2 kg der in Tab. 5 a und 5b aufgeführten Zusammensetzungen werden bei max. 234°C und 100 U/Min mit 4 kg/h in einem

Zweischneckenextruder ZSK25 verarbeitet. Alle Rezepturbestandteile werden als Vormischung aufgegeben. Die Polymerschmelze wird durch eine einfache Lochdüse (d=2,8 mm) zu einem Strang extrudiert; dieser wird nach Verfestigung durch Kühlung in einem Wasserbad granuliert. Der Schmelzindex (MFR) des Granulats wird mit Hilfe eines Prüfgerätes Göttfert MP-D nach ISO 1133 gemessen. Anschließend wird das Material in einer Spritzgießmaschine (Arburg 320S) zu Schlagzugstäben nach DIN 53448, Form A verarbeitet. Die Teststäbe werden mit Hilfe eines Prüfgerätes Zwick PSW 5101 mit 25J Pendel hinsichtlich Schlagzugzähigkeit bei Raumtemperatur (23°C) und bei-30°C untersucht. Die Ergebnisse sind in Tab. 5a zusammengefaßt.

Tab. 5a

| Probe | Rezeptur | MFR (230/2,16) [g/10 Min] | Schlagzugzähigkeit 23°C [kJ/m²] | Schlagzug zähigkeit -30°C [kJ/m²] |
|---|---|---|---|---|
| 12 | Novolen 1106 | 2,33 | 475 | 139 |
| 13 | Novolen 1106 3% Hycar ETBN 1300x44 0,5% Araldit MT0163 | 1,99 | 474 | 196 |

In Anlehnung an DIN 53455 wird bei folgenden Zusammensetzung zusätzlich die Zugfestigkeit und Reissdehnung am Schlagzugstab bestimmt (Tab. 5b):

Tab. 5b

| Probe | Rezeptur | Schlagzugzähigkeit Raumtem. [kJ/m²] | Schlagzugzähigkeit -30°C [kJ/m²] | Zugfestigkeit [N/mm²] | Reissdehnung [%] |
|---|---|---|---|---|---|
| 14 | Novolen 1106 | 475 | 139 | 35,4 | 1051 |
| 15 | Novolen 1106 2% Tegomer A-Si 2322 0,5% Araldit MT0163 | 622 | 244 | 36,8 | 1049 |

Beispiel 6: Molekulargewichtsaufbau von Polystyrol Neumaterial

Verwendetes Polymer: Polystyrol 165H glasklar mit MFR (200/5): 3,56 g/10 Min der Fa. BASF

Jeweils 2 kg der in Tab. 6 aufgeführten Zusammensetzungen werden bei max. 200°C und 100 U/Min mit 4 kg/h in einem Zweischneckenextruder ZSK25 verarbeitet. Alle Rezepturbestandteile werden als Vormischung aufgegeben. Die Polymerschmelze wird durch eine einfache Lochdüse (d=2,8 mm) zu einem Strang extrudiert; dieser wird nach Verfestigung durch Kühlung in einem Wasserbad granuliert. Der Schmelzindex (MFR) des Granulats wird mit Hilfe eines Prüfgerätes Göttfert MP-D nach ISO 1133 gemessen. Die Ergebnisse sind in Tab. 6 zusammengefaßt.

Tab. 6

| Probe | Rezeptur | MFR (200/5) [g/10 Min] |
|---|---|---|
| 17 | Polystyrol 165H glasklar | 4,77 |
| 18 | Polystyrol 165H glasklar 3% Hycar ATBN 0,5% Araldit MT0163 | 3,15 |

Beispiel 7: Eigenschaftsverbesserung von Polystyrol Neumaterial

Verwendetes Polymer: Polystyrol 165H glasklar mit MFR (200/5): 3,56 g/10 Min der Fa. BASF

Jeweils 2 kg der in Tab. 7 aufgeführten Zusammensetzungen werden bei max. 200°C und 100 U/Min mit 4 kg/h in einem Zweischneckenextruder ZSK25 verarbeitet. Alle Rezepturbestandteile werden als Vormischung aufgegeben. Die Polymerschmelze wird durch eine einfache Lochdüse (d=2,8 mm) zu einem Strang extrudiert; dieser wird nach Verfestigung durch Kühlung in einem Wasserbad granuliert. Der Schmelzindex (MFR) des Granulats wird mit Hilfe eines Prüfgerätes Göttfert MP-D nach ISO 1133 gemessen. Anschließend wird das Material in einer Spritzgießmaschine

(Arburg 320S) zu Parallelstäben nach ISO 180, 1A verarbeitet. Die Teststäbe wurden gekerbt und mit Hilfe eines Prüfgerätes Zwick PSW 5110 mit 5,5J Pendel hinsichtlich Kerbschlagzähigkeit nach IZOD bei Raumtemperatur (23°C) und bei -30°C untersucht. Die Ergebnisse sind in Tab. 7 zusammengefasst.

Tab. 7

| Probe | Rezeptur | MFR (200/5) [g/10 Min] | Kerbschlagzähigkeit IZOD 25°C [kJ/m$^2$] | Kerbschlagzähigkeit IZOD -30°C [kJ/m$^2$] |
|---|---|---|---|---|
| 20 | Polystyrol 165H glasklar | 4,77 | 4,65 | 3,47 |
| 22 | Polystyrol 165H glasklar<br>3% Tegomer A-Si 2322<br>0,5% Araldit MT0163 | * | 5,77 | 4,65 |
| * : Messung durch Siloxan Gleitmittel verfälscht | | | | |

Beispiel 8: Eigenschaftsverbesserung von EPDM-Recyclat

Verwendetes Polymer: Seculene® PPX8027SO mit MFR (230/2, 16): 5,75 g/10 Min der Fa. BSB Braubach

Jeweils 2 kg der in Tab. 9 aufgeführten Zusammensetzungen werden bei max. 221°C und 100 U/Min mit 4 kg/h in einem Zweischneckenextruder ZSK25 verarbeitet. Alle Rezepturbestandteile werden als Vormischung aufgegeben. Die Polymerschmelze wird durch eine einfache Lochdüse (d=2,8 mm) zu einem Strang extrudiert; dieser wird nach Verfestigung durch Kühlung in einem Wasserbad granuliert. Der Schmelzindex (MFR) des Granulats wird mit Hilfe eines Prüfgerätes Göttfert MP-D nach ISO 1133 gemessen. Anschließend wird das Material in einer Spritzgießmaschine (Arburg 320S) zu Schlagzugstäben nach DIN 53448, Form A verarbeitet. In Anlehnung an DIN 53455 werden die Teststäbe hinsichtlich Zugfestigkeit und Reissdehnung untersucht. Die Ergebnisse sind in Tab. 9 zusammengefaßt.

Tab. 9

| Probe | Rezeptur | MFR (230/2,16) [g/10 Min] | Zugfestigkeit [N/mm$^2$] | Reissdehnung [%] |
|---|---|---|---|---|
| 25 | Seculene® PPX8027SO | 6,05 | 24,1 | 163 |
| 26 | Seculene® PPX8027SO<br>3% Tegomer A-Si 2322<br>0,5% Araldit MT0163 | * | 21,9 | 206 |
| * : Wert durch Siloxan Gleitmittel verfälscht | | | | |

Verwendete Produkte

Irganox® 1010 (phenolisches Antioxidans, Ciba Spezialitätenchemie)
Irgafos® 168 (Phosphit, Ciba Spezialitätenchemie)
Araldit® GT 7072 (bifunktionelles oligomeres Epoxid auf Bisphenol A Basis (Ciba Spezialitätenchemie)
Araldit® MT 0163 festes tetrafunktionelles Epoxid (Ciba Spezialitätenchemie)
Tegomer® E-Si 2330: Epoxyalkylpolydimethylsiloxan (Fa. Goldschgmidt AG)
Tegomer® A-Si 2322: Aminoalkylpolydimethylsiloxan (Fa. Goldschmidt AG)
Hycar® ATBN 1300 x 21 und Hycar® ATBN 1300 x 45:
Amin-terminierte Butadien / Acrylnitril-Copolymere (BF Goodrich)
Hycar® ETBN 1300x44: Epoxy-terminiertes Polybutadien-co-acrylnitril (BF Goodrich)

**Patentansprüche**

1. Zusammensetzung, enthaltend

a) mindestens ein Polyolefin oder Vinylpolymeres;
b) mindestens ein di- oder polyfunktionelles (Co)polymer oder (Co)oligomer mit einer Glastemperatur von weniger als 10° C, welches ausgewählt wird aus der Gruppe bestehend aus Polysiloxanen und Butadien-Acrylnitril-Copolymeren, die jeweils an den Kettenenden durch Amin-, Oxiran- oder Vinylgruppen funktionalisiert sind; und
c) ein multifunktionelles Epoxid, welches verschieden ist von dem di- oder polyfunktionellen (Co)polymer oder (Co)oligomer mit einer Epoxygruppe.

**2.** Zusammensetzung nach Anspruch 1, worin das Polyolefin oder das Vinylpolymere ein Recyclat ist.

**3.** Zusammensetzung nach Anspruch 1, worin das Polyolefin, Polyethylen, Polypropylen oder ein Copolymeres davon ist.

**4.** Zusammensetzung nach Anspruch 1, worin das di- oder polyfunktionelle (Co)polymer oder (Co)oligomer ein Siloxan-Polymer ist, welches endständige Amin- oder Epoxy-Gruppen enthält.

**5.** Zusamensetzung nach Anspruch 1, worin die multifunktionelle Epoxidkomponente ein aromatisches Epoxid ist.

**6.** Zusammensetzung nach Anspruch 1, worin die multifunktionelle Epoxidkomponente eine Verbindung der nachstehend angegebenen Formeln ist:

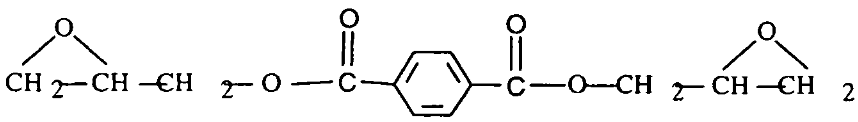

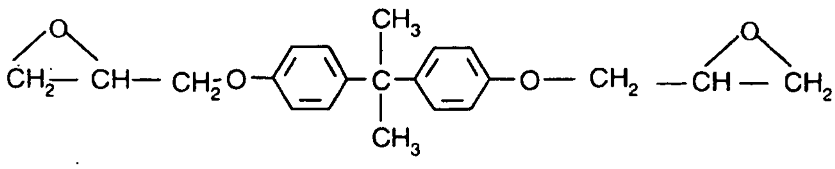

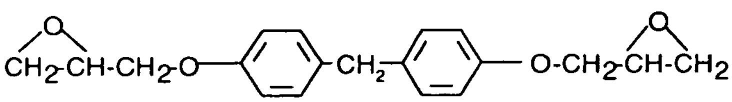

bzw.

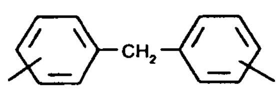

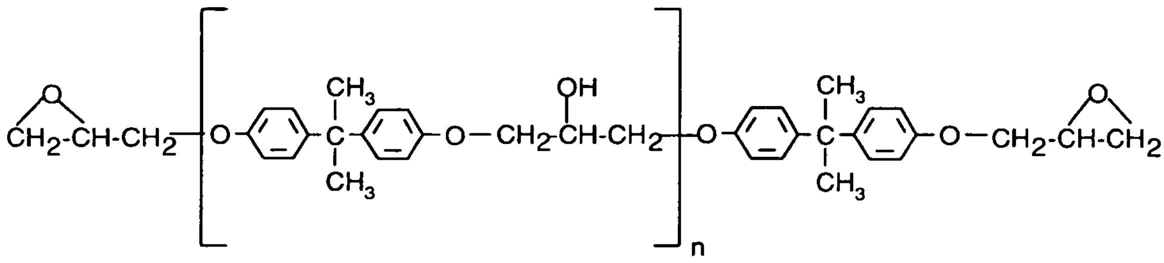

n = 1-10

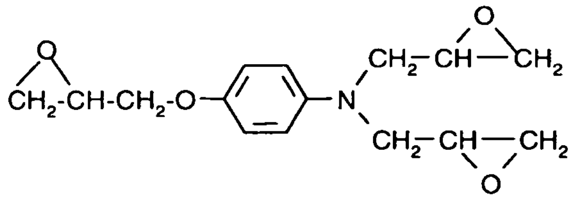

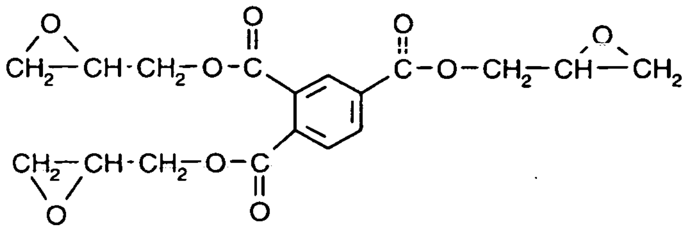

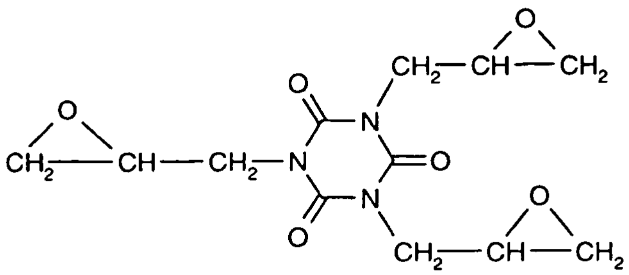

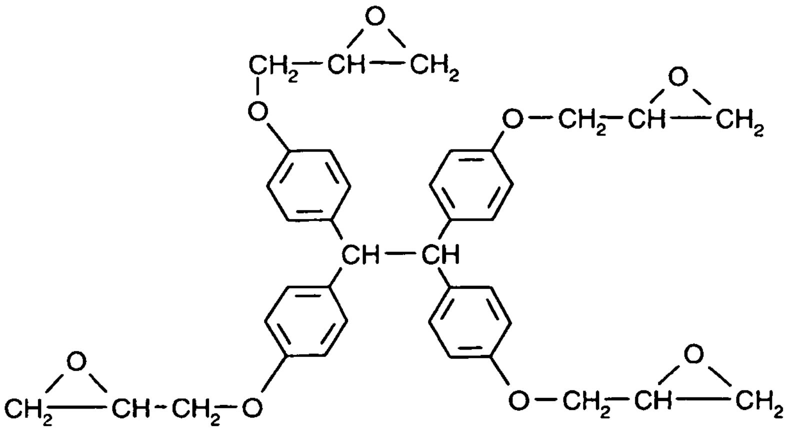

7. Zusammensetzung nach Anspruch 1, worin das di- oder polyfunktionelle (Co)polymer oder (Co)oligomer in einer Menge von 0,1 bis 20 Gew.-%, bezogen auf das Polyolefin oder Vinylpolymere, vorhanden ist.

8. Zusammensetzung nach Anspruch 1, worin das multifunktionelle Epoxid in einer Menge von 0,01 bis 5 Gew.-%, bezogen auf das Polyolefin oder Vinylpolymere vorhanden ist.

9. Zusammensetzung nach Anspruch 1, worin noch phenolische Antioxidantien, Phosphonate, Phosphite oder Benzofuranone enthalten sind.

10. Zusammensetzung nach Anspruch 1, enthaltend

a) ein Polyolefin Kunststoff-Recyclat aus gebrauchten Kunststoffkraftstoffbehältern;
b) mindestens ein di- oder polyfunktionelles Polysiloxan, wobei die funktionelle Gruppe eine Epoxygruppe oder eine Amingruppe ist und
c) mindestens ein phenolisches Antioxidans, Phosphonat, Phosphit, Benzofuranon oder Kombinationen daraus.

11. Verfahren zur Erhöhung des Molekulargewichts und/oder zur Verbesserung der mechanischen Eigenschaften von Polyolefin oder Vinylpolymeren, **dadurch gekennzeichnet, dass** man dem Polyolefin oder Vinylpolymeren mindestens ein di- oder polyfunktionelles (Co)polymer oder (Co)oligomer mit einer Glastemperatur von weniger als 10° C zusetzt, welches ausgewählt wird aus der Gruppe bestehend aus Polysiloxanen und Butadien-Acrylnitril-Copolymeren, die jeweils an den Kettenenden durch Amin-, Oxiran- oder Vinylgruppen funktionalisiert sind; und weiterhin ein multifunktionelles Epoxid zusetzt, welches verschieden ist von dem di- oder polyfunktionellen (Co)polymer oder (Co)oligomer mit einer Epoxygruppe.

12. Verfahren nach Anspruch 11, **dadurch gekennzeichnet, dass** der Zusatz während der Verarbeitung in einem Extruder erfolgt.

13. Polyolefin oder Vinylpolymer Kunststoffartikel, erhältlich gemäss dem Verfahren nach Anspruch 11.

14. Verwendung eines di- oder polyfunktionellen (Co)polymers oder (Co)oligomers mit einer Glastemperatur von weniger als 10° C, welches ausgewählt wird aus der Gruppe bestehend aus Polysiloxanen und Butadien-Acrylnitril-Copolymeren, die jeweils an den Kettenenden durch Amin-, Oxiran- oder Vinylgruppen funktionalisiert sind und eines multifunktionellen Epoxids, welches verschieden ist von dem di- oder polyfunktionellen (Co)polymer oder (Co)oligomer mit einer Epoxygruppe, zur Erhöhung des Molekulargewichts und/oder zur Verbesserung der mechanischen Eigenschaften von Polyolefinen und Vinylpolymeren.

## Claims

1. A composition comprising

a) at least one polyolefin or vinyl polymer;
b) at least one di- or poly-functional (co)polymer or (co)oligomer having a glass transition temperature of less than 10°C, which is selected from the group consisting of polysiloxanes and butadiene-acrylonitrile copolymers, in each case functionalised at the chain ends by amine, oxirane or vinyl groups; and
c) a multifunctional epoxide which is different from the di- or poly-functional (co)polymer or (co)oligomer having an epoxy group.

**2.** A composition according to claim 1 wherein the polyolefin or vinyl polymer is a recycled material.

**3.** A composition according to claim 1 wherein the polyolefin is polyethylene, polypropylene or a copolymer thereof.

**4.** A composition according to claim 1 wherein the di- or poly-functional (co)polymer or (co)oligomer is a siloxane polymer containing terminal amine or epoxy groups.

**5.** A composition according to claim 1 wherein the multifunctional epoxide component is an aromatic epoxide.

**6.** A composition according to claim 1 wherein the multifunctional epoxide component is a compound of a formula given below:

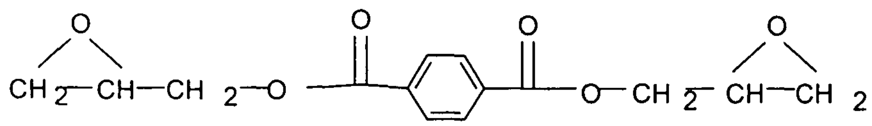

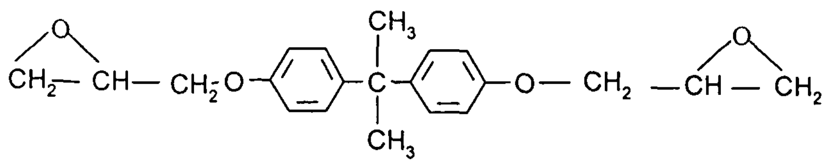

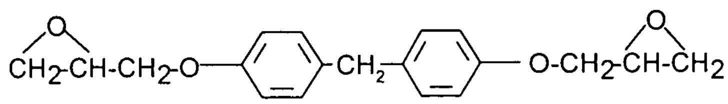 or 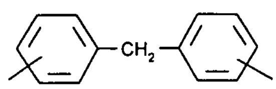

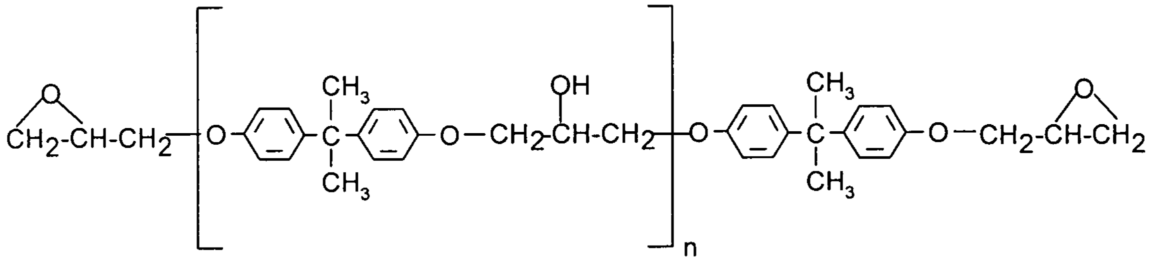

n = 1-10

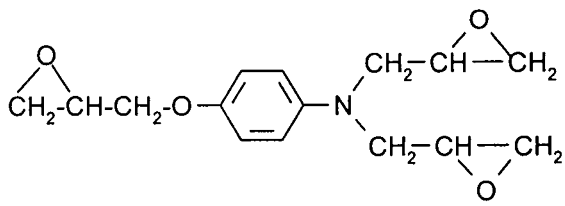

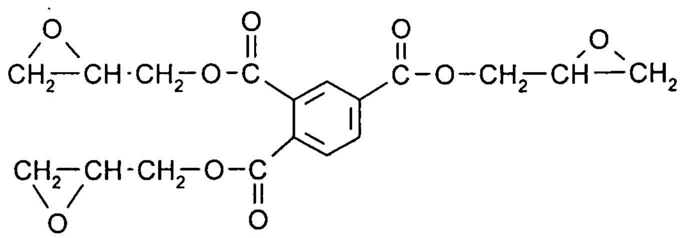

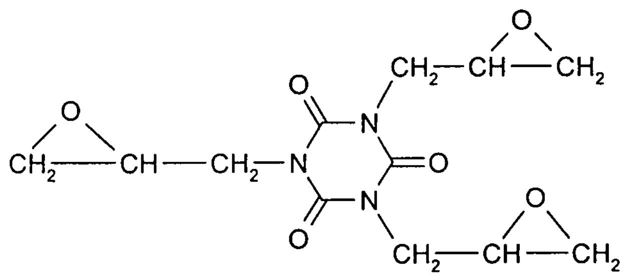

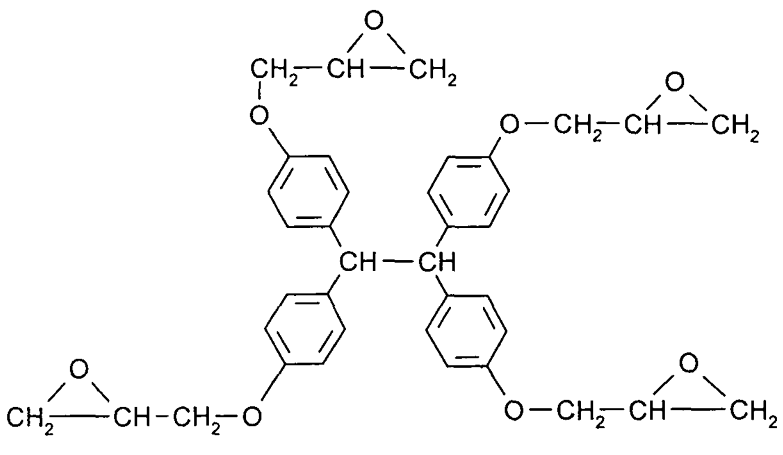

7. A composition according to claim 1 wherein the di- or poly-functional (co)polymer or (co)oligomer is present in an amount of from 0.1 to 20 % by weight, based on the polyolefin or vinyl polymer.

8. A composition according to claim 1 wherein the multifunctional epoxide is present in an amount of from 0.01 to 5 % by weight, based on the polyolefin or vinyl polymer.

9. A composition according to claim 1 which also comprises a phenolic anti-oxidant, a phosphonate, a phosphite or a

benzofuranone.

**10.** A composition according to claim 1 comprising

a) a polyolefin plastics material recycled from used plastics fuel containers;
b) at least one di- or poly-functional polysiloxane, the functional group being an epoxy group or an amine group; and
c) at least one phenolic anti-oxidant, phosphonate, phosphite, benzofuranone or a combination thereof.

**11.** A method of increasing the molecular weight and/or improving the mechanical properties of a polyolefin or a vinyl polymer, which comprises adding to the polyolefin or vinyl polymer at least one di- or poly-functional (co)polymer or (co)oligomer having a glass transition temperature of less than 10°C, which is selected from the group consisting of polysiloxanes and butadiene-acrylonitrile copolymers, in each case functionalised at the chain ends by amine, oxirane or vinyl groups; and furthermore adding a multifunctional epoxide which is different from the di- or poly-functional (co)polymer or (co)oligomer having an epoxy group.

**12.** A method according to claim 11 wherein the addition is performed during processing in an extruder.

**13.** A polyolefin or vinyl polymer plastics article obtainable by the method according to claim 11.

**14.** The use of a di- or poly-functional (co)polymer or (co)oligomer having a glass transition temperature of less than 10°C, which is selected from the group consisting of polysiloxanes and butadiene-acrylonitrile copolymers, in each case functionalised at the chain ends by amine, oxirane or vinyl groups, and of a multifunctional epoxide which is different from the di- or poly-functional (co)polymer or (co)oligomer having an epoxy group, in increasing the molecular weight and/or improving the mechanical properties of polyolefins and vinyl polymers.

## Revendications

**1.** Composition, contenant

a) au moins une polyoléfine ou un polymère vinylique ;
b) au moins un (co)polymère ou (co)oligomère di- ou poly-fonctionnel ayant une température de transition vitreuse inférieure à 10°C, choisi dans le groupe formé par les polysiloxanes et les copolymères butadiène/acrylonitrile qui sont chacun fonctionnalisés aux extrémités de chaîne par des groupes amino, oxirane ou vinyle ; et
c) un époxyde multifonctionnel qui est différent du (co)polymère ou (co)oligomère di- ou poly-fonctionnel contenant un groupe époxy.

**2.** Composition selon la revendication 1, dans laquelle la polyoléfine ou 1e polymère vinylique est un produit recyclé.

**3.** Composition selon la revendication 1, dans laquelle la polyoléfine est le polyéthylène, le polypropylène ou un copolymère de ceux-ci.

**4.** Composition selon 1a revendication 1, dans laquelle 1e (co)polymère ou le (co)oligomère di- ou poly-fonctionnel est un polymère de siloxane contenant des groupes amino ou époxyde terminaux.

**5.** Composition selon 1a revendication 1, dans laquelle le composant époxyde multifonctionnel est un époxyde aromatique.

**6.** Composition selon 1a revendication 1, dans laquelle le composant époxyde multifonctionnel est un composé répondant aux formules indiquées ci-dessous :

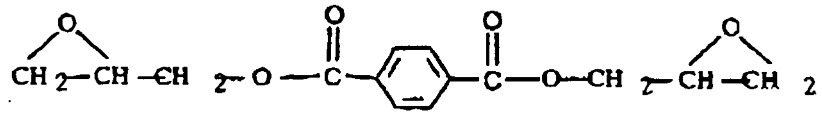

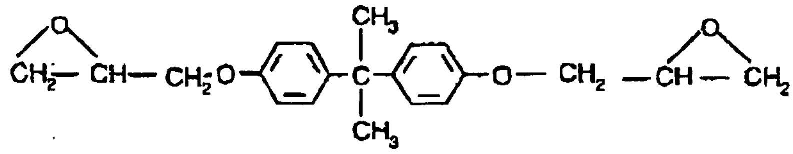

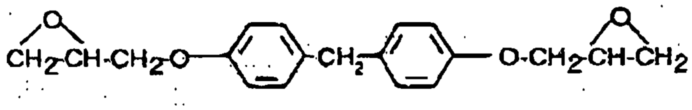

ou

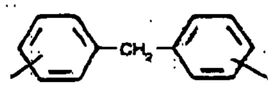

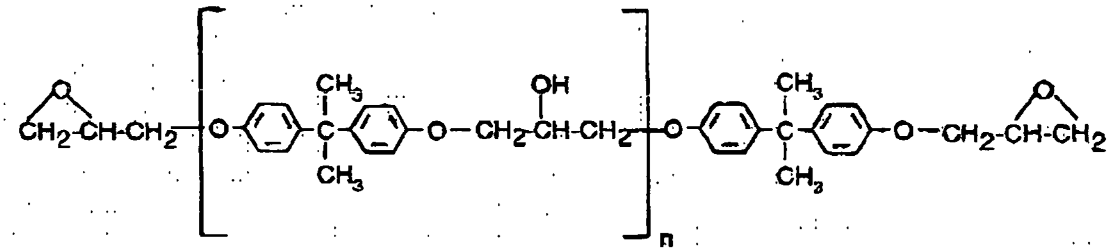

n = 1à10

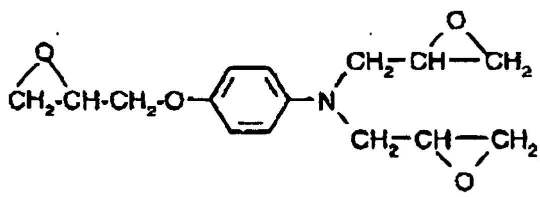

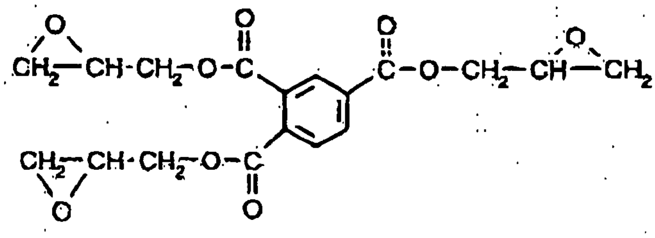

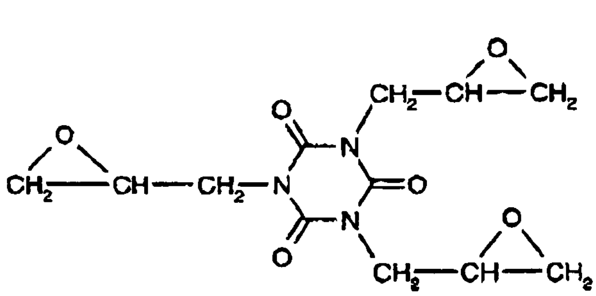

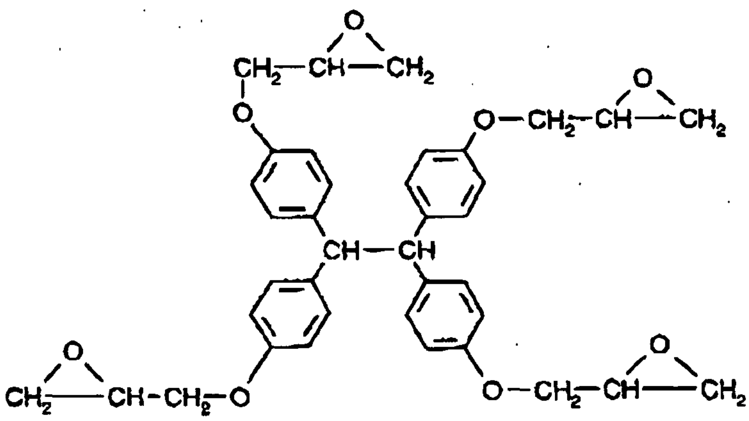

7. Composition selon la revendication 1, dans laquelle le (co)polymère ou le (co)oligomère di- ou poly-fonctionnel est présent à raison de 0,1% à 20% en poids par rapport à la polyoléfine ou au polymère vinylique.

8. Composition selon la revendication 1, dans laquelle l'époxyde multifonctionnel est présent à raison de 0,01% à 5% en poids par rapport à la polyoléfine ou au polymère vinylique.

9. Composition selon 1a revendication 1, contenant en plus des antioxydants phénoliques, des phosphonates, des phosphites ou des benzofuranones.

10. Composition selon la revendication 1, contenant

a) une matière plastique à base de polyoléfine recyclée à partir de réservoirs de carburant en matière plastique usagés ;
b) au moins un polysiloxane di- ou poly-fonctionnel, dans lequel le groupe fonctionnel est un groupe époxy ou un groupe amino et
c) au moins un antioxydant phénolique, un phosphonate, un phosphite, une benzofuranone ou une combinaison de ceux-ci.

11. Procédé permettant d'augmenter 1a masse moléculaire et/ou d'améliorer les propriétés mécaniques de polyoléfines ou de polymères vinyliques, **caractérisé en ce que** l'on ajoute à la polyoléfine ou au polymère vinylique au moins un (co)polymère ou (co)oligomère di- ou poly-fonctionnel ayant une température de transition vitreuse inférieure à 10°C, qui est choisi dans le groupe formé par les polysiloxanes et les copolymères butadiène/acrylonitrile qui sont chacun fonctionnalisés aux extrémités de chaîne par des groupes amino, oxirane ou vinyle ; ainsi qu'un époxyde multifonctionnel qui est différent du (co)polymère ou du (co)oligomère di- ou poly-fonctionnel contenant un groupe époxy.

12. Procédé selon 1a revendication 11, **caractérisé en ce que** l'addition a lieu pendant le traitement dans une extrudeuse.

13. Article de matière plastique à base de polyoléfine ou de polymère vinylique, pouvant être obtenu selon le procédé selon la revendication 11.

14. Utilisation d'un (co)polymère ou d'un (co)oligomère di- ou poly-fonctionnel ayant une température de transition vitreuse inférieure à 10°C, qui est choisi dans le groupe formé par les polysiloxanes et les copolymères butadiène/acrylonitrile, qui sont chacun fonctionnalisés aux extrémités de chaîne par des groupes amino, oxirane ou vinyle, et d'un époxyde multifonctionnel qui est différent du (co)polymère ou du (co)oligomère di- ou poly-fonctionnel comprenant un groupe époxy, pour augmenter la masse moléculaire et/ou pour améliorer les propriétés mécaniques de polyoléfines et de polymères vinyliques.